# EUROPÄISCHE PATENTSCHRIFT

(11) **EP 2 715 542 B1**
(45) Veröffentlichungstag und Bekanntmachung des Hinweises auf die Patenterteilung: **27.11.2019**
(21) Anmeldenummer: 12719336.5
(22) Anmeldetag: 27.04.2012
(51) Int. Cl.: G06F 11/16, G01F 1/84

(54) **MESSGERÄT-ELEKTRONIK FÜR EIN MESSGERÄT-GERÄT UND VERFAHREN ZUM ÜBERPRÜFEN DES MESSGERÄTS**
ELECTRONIC CIRCUIT FOR A MEASURING APPARATUS AND METHOD OF CHECKING THE APPARATUS
CIRUCIT ELECTRONIQUE POUR UN APPAREIL DE MESURE ET PROCEDE DE CONTROLE POUR LEDIT APPAREIL

(30) Priorität: 31.05.2011 DE 102011076838
(43) Veröffentlichungstag der Anmeldung: 09.04.2014
(73) Patentinhaber: Endress+Hauser Flowtec AG, 4153 Reinach (BL) (CH)
(72) Erfinder: DRAHM, Wolfgang, 85435 Erding (DE); ENGSTLER, Gernot, CH-4125 Riehen (CH); POHL, Hans, 79379 Müllheim (DE); MATT, Christian, CH-4147 Aesch (CH); LALLA, Robert, 79541 Lörrach (DE); BRUDERMANN, Matthias, CH-4313 Moehlin (CH)
(74) Vertreter: Andres, Angelika Maria
(86) Internationale Anmeldenummer: PCT/EP2012/057791
(87) Internationale Veröffentlichungsnummer: WO 2012/163608

(56) Entgegenhaltungen:
- DE-A1-102008 014 347
- US-A- 4 156 200
- US-A- 4 254 492
- US-A- 5 602 346
- US-A- 5 767 665
- US-A- 5 969 558
- US-A- 6 073 495
- US-A1- 2009 178 937
- US-B1- 6 252 826

## Beschreibung

Die Erfindung betrifft eine Meßgerät-Elektronik für ein, insb. als Meß- und/oder Schaltgerät der industriellen Meß- und Automatisierungstechnik ausgebildetes und/oder elektronisches, Meßgerät-Gerät sowie ein solches Meßgerät-Gerät. Überdies betrifft die Erfindung ein Verfahren zum Verifizieren eines solchen Meßgeräts.

In der industriellen Prozeß-Meßtechnik werden, insb. auch im Zusammenhang mit der Automation chemischer oder verfahrenstechnischer Prozesse und/oder der automatisierten Steuerung von industriellen Anlagen, prozeßnah installierte elektrische Meßgeräte, so genannte Feldgeräte, wie z.B. Coriolis-Massendurchfluß-Meßgeräte, Dichte-Meßgeräte, magnetisch-induktive Durchflußmeßgeräte, Wirbel-Durchflußmeßgeräte, Ultraschall-Durchflußmeßgeräte, thermische Massendurchfluß-Meßgeräte, Druck-Meßgeräte, Füllstand-Meßgeräte etc., eingesetzt, die der Erzeugung von Prozeßgrößen repräsentierenden Meßwerten sowie diese letztlich tragende, ggf. also auch digitale, Meßwertsignalen dienen. Bei den jeweils zu erfassenden Prozeßgrößen kann es sich je nach Anwendung beispielsweise, um einen Massendurchfluß, eine Dichte, eine Viskosität, einen Füllstand, einen Grenzstand oder dergleichen, eines flüssigen, pulver-, dampf- oder gasförmigen Mediums handeln, das in einem entsprechenden Behälter, wie z.B. einer Rohrleitung oder einem Tank, geführt bzw. vorgehalten wird.

Zum Erfassen der jeweiligen Prozeßgrößen weisen Meßgeräte der vorgenannten Art jeweils einen entsprechenden physikalisch-elektrischen oder chemisch-elektrischen Meßwandler auf. Dieser ist zumeist in eine Wandung des das Medium jeweils führenden Behälters oder der in den Verlauf einer das Medium jeweils führenden Leitung, beispielsweise eine Rohrleitung, eingesetzt und dient dazu, wenigstens ein mit der zu erfassenden Prozeßgröße entsprechend korrespondierendes elektrisches Meßsignal zu erzeugen. Zum Verarbeiten des Meßsignals ist der Meßwandler weiters mit einer in einer Meßgerät-Elektronik des Meßgeräts vorgesehenen, der Weiterverarbeitung oder Auswertung des wenigstens einen Meßsignals wie auch der Generierung entsprechender Meßwertesignale dienenden, Meßgerät internen Betriebs- und Auswerteschaltung verbunden. Letztere ist bei modernen Meßgeräten der in Rede stehenden Art zumeist mittels eines von einem entsprechenden Taktgenerator getakteten Prozessors, wie etwa einem Mikroprozessor und/oder einem digitalen Signalprozessor (DSP), gebildet. Weiterführende Beispiele für derartige, dem Fachmann an und für sich bekannte Meßgeräte bzw. Meßwandler, insb. auch deren Verwendung und deren Betrieb betreffende Einzelheiten, sind u.a. in der DE 100 41 166, der DE-A 10 2005 032808, der DE-A 37 11 754, der DE-A 39 34 007, der DE-A 44 12 388, der EP-A 1 058 093, der EP-A 1 147 463, der EP-A 1 158 289, der EP-A 1 197 732, der EP-A 1 669 726, der EP-A 525 920, der EP-A 591 926, der EP-A 866 318, der EP-A 926 473, der EP-A 984 248, der US-A 2004/0117675, der US-A 2005/0139015, der US-A 2006/0096390, der US-A 2006/0112774, der US-A 2006/0120054, der US-A 2006/0161359, der US-A 2006/0179956, der US-A 2007/0217091, der US-A 2009/0000392, der US- A 2009/0038406, der US-A 2009/0277281, der US-A 2010/0095784, der US-A 2010/0236338, der US-A 2010/0242623, der US-A 2010/0242624, der US-A 2010/0255796, der US-A 38 78 725, der US-A 43 08 754, der US-A 43 17 116, der US-A 44 68 971, der US-A 45 24 610, der US-A 45 74 328, der US-A 45 94 584, der US-A 46 17 607, der US-A 46 56 353, der US-A 47 16 770, der US-A 47 68 384, der US-A 47 77 833, der US-A 48 01 897, der US-A 48 50 213, der US-A 48 79 911, der US-A 49 26 340, der US-A 50 09 109, der US-A 50 24 104, der US-A 50 50 439, der US-A 50 52 230, der US-A 50 65 152, der US-A 50 68 592, der US-A 51 31 279, der US-A 52 07 101, der US-A 52 31 884, der US-A 53 59 881, der US-A 53 63 341, der US-A 54 16 723, der US-A 54 69 748, der US-A 55 35 243, der US-A 56 02 345, der US-A 56 04 685, der US-A 56 72 975, der US-A 56 87 100, der US-A 57 06 007, der US-A 57 31 527, der US-A 57 42 225, der US-A 57 42 225, der US-A 57 96 011, der US-A 58 04 741, der US-A 58 69 770, der US-A 59 59 372, der US-A 60 06 609, der US-A 60 14 100, der US-A 60 51 783, der US-A 60 73 495, der US-A 61 40 940, der US-B 62 36 322, der US-B 62 69 701, der US-B 62 85 094, der US-B 63 11 136, der US-B 63 52 000, der US-B 63 66 436, der US-B 63 97 683, der US-B 64 76 522, der US-B 64 80 131, der US-B 64 87 507, der US-B 65 12 358, der US-B 65 13 393, der US-B 65 35 161, der US-B 65 39 819, der US-B 65 56 447, der US-B 65 74 515, der US-B 65 77 989, der US-B 66 40 308, der US-B 66 62 120, der US-B 66 66 098, der US-B 67 69 301, der US-B 67 76 053, der US-B 67 99 476, der US-B 68 40 109, der US-B 68 54 055, der US-B 69 20 798, der US-B 70 17 424, der US-B 70 32 045, der US-B 70 73 396, der US-B 70 75 313, der US-B 71 33 727, der US-B 71 34 348, der US-B 72 00 503, der US-B 73 60 451, der WO-A 00/14 485, der WO-A 00/36 379, der WO-A 00/48157, der WO-A 01/02816, der WO-A 02/086426, der WO-A 02/103327, der WO-A 02/45045, der WO-A 03/048874, der WO-A 2006/073388, der WO-A 2008/003627, der WO-A 2011/011255, der WO-A 88/02 476, der WO-A 88/02 853, oder der WO-A 95/16 897 hinreichend ausführlich und detailliert beschrieben.

Bei einer Vielzahl von Meßgeräten der in Rede stehenden Art wird der Meßwandler zum Erzeugen des Meßsignals im Betrieb zudem von einem von der Betriebs- und Auswerteschaltung zumindest zeitweise generierten Treibersignal so angesteuert, daß er in einer für die Messung geeigneten Weise zumindest mittelbar oder aber auch über eine das Medium direkt kontaktierende Sonde praktisch unmittelbar auf das Medium einwirkt, um dort mit der zu erfassenden Meßgröße entsprechend korrespondierende Reaktionen hervorzurufen. Das Treibersignal kann dabei beispielsweise hinsichtlich einer Stromstärke, einer Spannungshöhe und/oder einer Frequenz entsprechend geregelt sein. Als Beispiele für solche aktiven, also ein elektrisches Treibersignal im Medium entsprechend umsetzende Meßwandler sind im besonderen dem Messen von zumindest zeitweise strömenden Medien dienende Durchfluß-Meßwandler, z.B. mit wenigstens einer vom Treibersignal angesteuerten, Magnetfeld erzeugenden Spule oder wenigstens einem vom Treibersignal angesteuerten Ultraschallsender, oder aber auch dem Messen und/oder Überwachen von Füllständen in einem Behälter dienende Füllstands- und/oder Grenzstandsaufnehmer, wie z.B. mit freistrahlender Mikrowellenantenne, mit Gouboun-Leitung oder mit vibrierendem Tauchkörper, zu nennen.

Geräte der in Rede stehenden Art weisen ferner wenigstens ein Gehäuse mit wenigstens einer elektrische, elektronische und/oder elektro-mechanische Bauteile und/oder Baugruppen des Geräts, beispielsweise Komponenten der erwähnten Betriebs- und Auswerteschaltung, aufnehmende, üblicherweise druckdicht und/oder explosionsfest verschlossene Kammer auf. So umfassen Meßgeräte der beschriebenen Art zur Aufnahme der Meßgerät-Elektronik zumeist ein vergleichsweise robustes, insb. schlag-, druck-, und/oder wetterfestes, Elektronik-Gehäuse. Dieses kann, wie z.B. in der US-A 63 97 683 oder der WO-A 00/36379 vorgeschlagen, vom Meßgerät entfernt angeordnet und mit diesem nur über eine flexible Leitung verbunden sein; es kann aber auch, wie z.B. in der EP-A 903 651 oder der EP-A 1 008 836 gezeigt, direkt am Meßwandler oder einem den Meßwandler separat einhausenden Meßwandler-Gehäuse angeordnet sein. Gegebenenfalls kann dann das Elektronik-Gehäuse, wie beispielsweise in der EP-A 984 248, der US-A 45 94 584, der US-A 47 16 770 oder der US-A 63 52 000 gezeigt, auch dazu dienen, einige mechanische Komponenten des Meßwandlers mit aufzunehmen, wie z.B. sich unter mechanischer Einwirkung betriebsmäßig verformende membran-, stab-, hülsen- oder rohrförmige Deformation- oder Vibrationskörper, vgl. hierzu auch die eingangs erwähnte US-B 63 52 000 oder US-A 60 51 783.

Bei Meßgeräten ist die jeweilige Meßgerät-Elektronik üblicherweise über entsprechende elektrische Leitungen an ein vom jeweiligen Gerät zumeist räumlich entfernt angeordnetes und zumeist auch räumlich verteiltes übergeordneten elektronischen Datenverarbeitungssystem elektrisch angeschlossen, an das die vom jeweiligen Meßgerät erzeugten Meßwerte mittels eines diese entsprechend tragenden Meßwertesignals zeitnah weitergegeben werden. Elektrische Geräte der beschriebenen Art sind zudem üblicherweise mittels eines innerhalb des übergeordneten Datenverarbeitungssystems vorgesehenen Datenübertragungsnetzwerks miteinander und/oder mit entsprechenden elektronischen Prozeß-Steuerungen verbunden, beispielsweise vor Ort installierte Speicherprogrammierbare Steuerungen oder in einer entfernten Leitwarte installierte Prozeß-Leitrechnern, wohin die mittels des Meßgeräts erzeugten und in geeigneter Weise digitalisierten und entsprechend codierten Meßwerte weitergesendet werden. Mittels solcher Prozeß-Leitrechner können die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Da moderne Meßanordnungen zumeist auch direkt von solchen Leitrechnern aus überwacht und gegebenenfalls gesteuert und/oder konfiguriert werden können, werden in entsprechender Weise über vorgenannte, zumeist hinsichtlich der Übertragungsphysik und/oder der Übertragungslogik hybride Datenübertragungsnetzwerke dem Meßgerät zugewiesene Betriebsdaten gleichermaßen versendet. Dementsprechend dient das Datenverarbeitungssystem üblicherweise auch dazu, das vom Meßgerät gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die vom jeweiligen Meß- und/oder Schaltgerät empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, RACKBUS-RS 485, PROFIBUS etc., oder beispielsweise auch Netzwerke auf Basis des ETHERNET-Standards sowie die entsprechenden, zumeist übergreifend standardisierten Übertragungs-Protokolle.

Neben den für die Verarbeitung und Konvertierung der von den jeweils angeschlossenen Meßgerät gelieferten Meßwerte erforderlichen Auswerteschaltungen weisen solche übergeordnete Datenverarbeitungssysteme zumeist auch der Versorgung der angeschlossenen Meß- und/oder Schaltgräte mit elektrischer Energie dienende elektrische Versorgungsschaltungen auf, die eine entsprechende, ggf. direkt vom angeschlossenen Feldbus gespeiste, Versorgungsspannung für die jeweilige Meßgerät-Elektronik bereitstellen und die daran angeschlossenen elektrische Leitungen sowie die jeweiligen Meßgerät-Elektroniken durchfließende elektrische Ströme treiben. Eine Versorgungsschaltung kann dabei beispielsweise genau einem Meßgerät jeweils zugeordnet und zusammen mit der dem jeweiligen Meßgerät zugeordneten Auswerteschaltung - beispielsweise zu einem entsprechenden Feldbusadapter vereint - in einem gemeinsamen, z.B. als Hutschienen-Modul ausgebildeten, Elektronik-Gehäuse untergebracht sein. Es ist aber durchaus auch üblich, Versorgungsschaltungen und Auswerteschaltungen jeweils in separaten, ggf. voneinander räumlich entfernten Elektronik-Gehäusen unterzubringen und über externe Leitungen miteinander entsprechend zu verdrahten.

Wie u.a. in den eingangs erwähnten EP-A 1 197 732 oder US-A 2009/0000392 erwähnt, sind Meßgeräte der in Rede stehenden Art gelegentlich daraufhin zu überprüfen - sei es auf Veranlassung des das Meßgerät betreibenden Anwenders und/oder auf Anforderung einer die mittels des Meßgerät gebildete Meßstelle beaufsichtigenden Behörde -, ob die geforderte bzw. in der Spezifikation ausgewiesene Meßgenauigkeit nach wie vor verläßlich erreicht ist, oder ob das Meßgerät - etwa infolge von Abnutzung des Meßwandlers und/oder Alterung der Meßgerät-Elektronik - nicht mehr ausreichend genau bzw. nicht mehr ausreichend reproduzierbar mißt.

Solche Überprüfungen der Meßgerät-Elektronik im Sinne einer nachträglichen Verifikation von deren Meßfunktionalität bzw. einer gleichermaßen nachträglichen Validierung der mittels des Meßgeräts erzeugten Meßwerten erfolgt bei konventionellen Meßgeräten regelmäßig dadurch, daß an die Meßgerät-Elektronik via Serviceschnittstelle ein entsprechend zertifiziertes externes Prüfgerät angeschlossen wird, daß dazu dient, wenigstens ein dem wenigstens einen Meßsignal entsprechendes definiertes Testsignal an den Eingang der Meßgerät-Elektronik für das jeweilig Meßsignal des Meßwandlers anzulegen. Mittels des Testsignals kann so jeweils ein bestimmtes Verhalten des Meßwandlers, mithin ein dementsprechender bestimmter Meßwert für die ansonsten zu erfassende Meßgröße simuliert werden. Damit einhergehend können so mittels der Meßgerät-Elektronik dem jeweiligen Testsignal entsprechende Test-Meßwerte erzeugt und mit dem jeweiligen Testsignal entsprechenden Vorgaben für Test-Meßwerte verglichen werden. Weichen die Test-Meßwerte weniger als ein zulässiges Höchstmaß von den Vorgaben ab, so hat die Meßgerät-Elektronik, mithin das Meßgerät diese Überprüfung bestanden, mithin ist die Meßgerät-Elektronik entsprechend verifiziert und für einen weiteren Betrieb zugelassen.

Ein Nachteil eines solchen Verfahrens zur Überprüfung von Meßgerät-Elektroniken ist nicht zuletzt darin zu sehen, daß zu dessen Durchführung der normale Meßbetrieb des Meßgerät unterbrochen, mithin der von der Meßstelle aus überwachte Anlagenteil für die Dauer der Überprüfung außer Betrieb genommen werden muß. Darüberhinaus erfordert eine solche Überprüfung ein spezielles, zumeist sehr teueres bzw. wiederkehrend sehr aufwendig zu rekalibrierendes Prüfgerät und ist regelmäßig nur von entsprechend geschulten und zugelassenen Prüfern durchzuführen.
Dem Rechnung tragend besteht eine Aufgabe der Erfindung darin, Verfahren zum Überprüfen von Meßgeräten der in Rede stehenden Art, insb. solchen die Meßwerte für chemische bzw. physikalische Meßgrößen basierend auf einer (Lauf-) Zeit- und/oder Frequenz- bzw.
Phasenwinkelmessung generieren, bzw. Meßgerät-Elektroniken solcher Meßgeräte dahingehend zu verbessern, daß nämliches Überprüfen der Meßgeräte-Elektronik, nicht zuletzt auch im Sinne einer Verifikation der Meßfunktionalität der jeweiligen Meßgerät-Elektronik und/oder einer Validierung von damit erzeugten Meßwerten, zumindest anteilig mit "bordeigenen" Mitteln des Meßgeräts erfolgen kann, und zwar möglichst auch ohne Unterbrechung des normalen Meßbetriebs.
Zur Lösung der Aufgabe besteht die Erfindung in einem Meßgerät zum Messen wenigstens einer physikalischen und/oder chemischen Meßgröße eines in einer Leitung - beispielsweise einer Rohrleitung oder einem Gerinne - oder in einem Behälter - beispielsweise einem Tank oder einem Becken - geführten Mediums, welches Meßgerät eine Meßgerät-Elektronik sowie eine mit nämlicher Meßgerät-Elektronik elektrisch gekoppelten Meßwandler zum Wandeln der wenigstens einen Meßgröße in wenigstens ein davon abhängiges Meßsignal umfaßt, wobei die Meßgerät-Elektronik einen - beispielsweise als Mikroprozessor oder als digitaler Signalprozessor ausgebildeten - Prozessor, einen - beispielsweise mittels eines Quarzoszillators und/oder mittels einer PLL-Schaltung und/oder mittels einer FLL-Schaltung gebildeten - ersten Taktgenerator zum Erzeugen eines den Prozessor taktenden Arbeitstaktsignals mit einer nominell konstanten Taktfrequenz und zum Erzeugen eines vom Arbeitstaktsignal abhängigen ersten Referenztaktsignals mit einer nominell konstanten Taktfrequenz, die um ein vorgegebenes Vielfaches kleiner als die Taktfrequenz des Arbeitstaktsignals ist, einen - beispielsweise mittels eines Quarzoszillators gebildeten und/oder mittels einer PLL-Schaltung und/oder mittels einer FLL-Schaltung gebildeten - zweiten Taktgenerator zum Erzeugen eines vom Arbeitstaktsignal unabhängigen - beispielsweise als Referenz für das Arbeitstaktsignal dienenden - zweiten Referenztaktsignals mit einer nominell konstanten Taktfrequenz, die um ein vorgegebenes Vielfaches kleiner als die Taktfrequenz des Arbeitstaktsignals ist sowie einen von einem der beiden Referenztaktsignale gesteuerten Zähler mit einem Zähleingang für das andere, nämlich das den Zähler nicht steuernde Referenztaktsignal umfaßt, wobei der Prozessor dafür eingerichtet ist, unter Verwendung des Arbeitstaktsignals als Referenz - beispielsweise als Zeitbasis - sowie des wenigstens eine Meßsignals einen die wenigstens eine Meßgröße repräsentierenden Meßwert zu ermitteln und wobei der Prozessor dafür eingerichtet ist, anhand eines vom Zähler gelieferten Zählergebnisses für Takte des am Zähleingang liegenden Referenztaktsignals festzustellen, ob zumindest einer der beiden Taktgeneratoren ein Referenztaktsignal mit einer momentanen Taktfrequenz liefert, die von der dafür jeweils vorgegebenen nominellen Taktfrequenz um ein vorgegebenes Maß abweicht.

Darüberhinaus besteht die Erfindung auch in einem Verfahren zum Überprüfen eines solchen Meßgeräts - beispielsweise zum Verifizieren der Meßfunktionalität von dessen Meßgerät-Elektronik und/oder zum Validieren von mittels des Meßgeräts erzeugten Meßwerten -, wobei das Verfahren Schritte:
- des Erzeugens des Arbeitstaktsignals mittels des ersten Taktgenerators, des Taktens des Prozessors mit dem Arbeitstaktsignal;
- des Erzeugens des ersten Referenztaktsignals mittels des ersten Taktgenerators;
- des Erzeugens des zweiten Referenztaktsignals mittels des zweiten Taktgenerators;
- des Erzeugens von die wenigstens eine Meßgröße repräsentierenden Meßwerten mittels des Prozessors - beispielsweise basierend auf dem wenigstens einen Meßsignal sowie dem Arbeitstaktsignal als Zeit- und/oder Frequenzbasis für das wenigstens eine Meßsignal bzw. die Meßwerte;
- des Ermittelns eines Frequenz-Unterschied, der einen Unterschied zwischen der momentanen Taktfrequenz des ersten Referenztaktsignals und der momentanen Taktfrequenz des zweite Referenztaktsignals repräsentiert; sowie
- des Generierens einer Fehlermeldung, die signalisiert, daß zumindest einer der beiden Taktgeneratoren ein Referenztaktsignal mit einer momentanen Taktfrequenz liefert, die von einer dafür jeweils vorgegebenen nominellen Taktfrequenz um ein vorgegebenes Maß abweicht, und/oder die signalisiert, daß mittels des Prozessors ermittelte Meßwerte über ein vorgegebenes Maß hinausgehend fehlerbehaftet bzw. nicht verläßlich sind, falls die momentanen Taktfrequenzen des ersten und zweiten Referenztaktsignals um mehr als ein vorgegebenes Maß voneinander abweichen.

Nach einer ersten Ausgestaltung des Meßgeräts der Erfindung ist vorgesehen, daß der erste Taktgenerator zum Erzeugen des ersten Referenztaktsignals einen Frequenzteiler für das Arbeitstaktsignal aufweist.

Nach einer zweiten Ausgestaltung der des Meßgeräts der Erfindung ist vorgesehen, daß der erste Taktgenerator zum Erzeugen des Arbeitstaktsignals einen, beispielsweise mittels einer PLL-Schaltung und/oder mittels einer FLL-Schaltung gebildeten, Frequenzvervielfacher für das erste Referenztaktsignal aufweist.

Nach einer dritten Ausgestaltung des Meßgeräts der Erfindung ist vorgesehen, daß die Taktfrequenz des ersten Referenztaktsignals von der Taktfrequenz des zweiten Referenztaktsignals verschieden ist, etwa derart, daß die Taktfrequenz des ersten Referenztaktsignals niedriger ist als die Taktfrequenz des zweiten Referenztaktsignals.

Nach einer vierten Ausgestaltung des Meßgeräts der Erfindung ist vorgesehen, daß der Prozessor dafür eingerichtet ist, anhand des ersten Referenztaktsignals sowie anhand des zweiten Referenztaktsignals festzustellen, ob zumindest einer der beiden Taktgeneratoren ein Referenztaktsignal mit einer momentanen Taktfrequenz liefert, die von der dafür jeweils vorgegebenen nominellen Taktfrequenz um ein vorgegebenes Maß abweicht. Diese Ausgestaltung der Erfindung weiterbildend ist der Prozessor ferner dafür eingerichtet, unter Verwendung der beiden Referenztaktsignal, eine, beispielsweise als Alarm deklarierte, Meldung zu erzeugen, die signalisiert, das zumindest einer der beiden Taktgeneratoren ein Referenztaktsignal liefert, das eine von der dafür jeweils vorgegebenen nominellen Taktfrequenz abweichende momentane Taktfrequenz aufweist.

Nach einer fünften Ausgestaltung des Meßgeräts der Erfindung ist vorgesehen, daß der Prozessor dafür eingerichtet ist, einen momentane Frequenz-Unterschied, Δf, definiert als ein Unterschied zwischen der momentanen Taktfrequenz des ersten Referenztaktsignals und der momentanen Taktfrequenz des zweite Referenztaktsignals, zu ermitteln. Diese Ausgestaltung der Erfindung weiterbildend ist der Prozessor ferner dafür eingerichtet, den ermittelten momentanen Frequenz-Unterschied mit einem dafür vorgebbaren Schwellenwert zu vergleichen, der einen maximal zulässigen Frequenz-Unterschied repräsentiert. Dies z.B. auch in der Weise, daß der Prozessor, falls der ermittelte momentane Frequenz-Unterschied den Schwellenwert überschreitet, eine, beispielsweise als Alarm deklarierte, Meldung erzeugt, die signalisiert, das zumindest einer der beiden Taktgeneratoren ein Referenztaktsignal liefert, das eine von einer dafür jeweils vorgegebenen nominellen Taktfrequenz abweichenden Taktfrequenz aufweist. Beispielsweise kann der Prozessor den momentanen Frequenz-Unterschied basierend auf einer mittels der momentanen Taktfrequenz des ersten Referenztaktsignals und der momentanen Taktfrequenz des zweiten Referenztaktsignals gebildeten Frequenzdifferenz und/oder basierend auf einem mittels der momentanen Taktfrequenz des ersten Taktsignals und der momentanen Taktfrequenz des zweiten Taktsignals gebildeten Frequenzquotienten ermitteln.

Nach einer sechsten Ausgestaltung des Meßgeräts der Erfindung ist vorgesehen, daß die beiden, beispielsweise baugleichen, Taktgeneratoren im ungestörten, stationären Betriebsfall auf gleicher Betriebstemperatur gehalten sind.

Nach einer siebenten Ausgestaltung des Meßgeräts der Erfindung ist vorgesehen, daß der erste Taktgenerator auf einem Trägersubstrat, beispielsweise einer Leiterplatte, angebracht ist, das zumindest hinsichtlich seines Wärmeausdehnungskoeffizienten gleich ist mit einem Trägersubstrat, beispielsweise einer Leiterplatte, auf dem der zweite Taktgenerator angebracht ist.

Nach einer achten Ausgestaltung des Meßgeräts der Erfindung ist vorgesehen, daß der erste Taktgenerator und der zweite Taktgenerator auf ein und demselben Trägersubstrat, beispielsweise einer Leiterplatte, angebracht sind.

Nach einer neunten Ausgestaltung des Meßgeräts ist vorgesehen, daß das am Zähleingang liegende Referenztaktsignal dasjenige Referenztaktsignal ist, dessen Taktfrequenz höher ist als die Taktfrequenz des anderen, nämlich des den Zähler steuernden Referenztaktsignals ist.

Nach einer zehnten Ausgestaltung des Meßgeräts ist vorgesehen, daß die Taktfrequenz des den Zähler steuernden Referenztaktsignals ein Zählintervall bestimmt, innerhalb dem der Zähler Takte des am Zähleingang liegenden Referenztaktsignals, beispielsweise beginnend bei eins, zählt.

Nach einer elften Ausgestaltung des Meßgeräts der Erfindung ist vorgesehen, daß das Meßgerät ein zeit- und/oder ein frequenzbasiert messendes Meßgerät, beispielsweise ein Coriolis-

Massendurchfluß-Meßgerät, ein Ultraschall-Durchflußmeßgerät, ein Wirbel-Durchflußmeßgerät, ein Ultraschall-Füllstandsmeßgerät, oder ein Mikrowellen-Füllstandsmeßgerät, ist.

Nach einer Weiterbildung der Meßgerät-Elektronik umfaßt diese weiters: einen nicht-flüchtigen Datenspeicher für mittels der Meßgerät-Elektronik generierte Meß- und/oder Betriebsdaten.

Nach einer ersten Ausgestaltung des Verfahrens der Erfindung, umfaßt dieses weiters einen Schritt des Abspeicherns des ermittelten Frequenz-Unterschieds in einem nicht-flüchtigen Datenspeicher der Meßgerät-Elektronik. Diese Ausgestaltung des Verfahrens der Erfindung weiterbildend ist ferner vorgesehen ein den Zeitpunkt des Ermittelns des Frequenz-Unterschied - beispielsweise mit Tag und Uhrzeit - ausweisendes Datums im nicht-flüchtigen Datenspeicher abzuspeichern.

Nach einer zweiten Ausgestaltung des Verfahrens der Erfindung, umfaßt dieses weiters einen Schritt des Abspeicherns der Fehlermeldung in einem nicht-flüchtigen Datenspeicher der Meßgerät-Elektronik. Diese Ausgestaltung des Verfahrens der Erfindung weiterbildend ist ferner vorgesehen ein den Zeitpunkt der Generierung der Fehlermeldung - beispielsweise mit Tag und Uhrzeit - ausweisendes Datums im nicht-flüchtigen Datenspeicher abzuspeichern.

Ein Grundgedanke der Erfindung besteht darin, die Meßfunktionalität von Meßgeräten der in Rede stehenden Art dadurch zu überprüfen, daß der den - letztlich die Meßwerte liefernden - Prozessor taktende Taktgenerator mittels eines zusätzlichen Taktgenerators auf seine Funktionstüchtigkeit hin überwacht wird, indem mittels der beiden Taktgeneratoren voneinander unabhängig erzeugte, dennoch nominell in einer festen Frequenzbeziehung stehende (Referenz-)taktsignale darauf hin untersucht werden, ob und ggf. inwieweit ihr momentaner Frequenz-Unterschied vom nominell vorgegebenen Frequenz-Unterschied abweicht, mithin kann - sofern vorhanden - eine Abweichung der momentanen Taktfrequenz des Arbeitstaktsignals von der dafür nominell vorgegebenen Taktfrequenz sehr verläßlich abgeschätzt werden. Durch einen solchen, wiederkehrend durchgeführten Vergleich des momentanen Frequenz-Unterschieds mit dem dafür vorgegebenen Nominalwert kann eine für die angestrebte Meßgenauigkeit zu hohe Drift des Frequenz-Unterschieds, bei der also eine Störung des Gleichlaufs eines der beiden Taktgeneratoren und insoweit eine entsprechende Ungenauigkeit der basierend auf dem vom einen Taktgenerator bestimmten Arbeitstakt generierten Meßwerte zu besorgen ist, sehr rasch detektiert und entsprechend zeitnah signalisiert bzw. auch nachvollziehbar dokumentiert werden, etwa durch einen entsprechenden, ggf. mit Datum und Uhrzeit gekennzeichneten Vermerk im "bordeigenen" nicht-flüchtigen Datenspeicher.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:
- Fig. 1a, b: ein - hier als Kompakt-Meßgerät ausgebildetes - Meßgerät der industriellen Meß- und Automatisierungstechnik für in Rohrleitungen strömende Medien in verschiedenen Seitenansichten;
- Fig. 2: schematisch nach Art eines Blockschaltbildes eine, insb. auch für ein Meßgerät gemäß den Fig. 1a, 1b geeignete, Meßgerät-Elektronik mit daran angeschlossenem Meßwandler;
- Fig. 3a, 3b: in, teilweise geschnittenen bzw. perspektivischen, Ansichten einen, insb. für ein Meßgerät gemäß den Fig. 1a, 1b geeigneten, Meßwandlers vom Vibrations-Typ mit einem im Betrieb vibrierenden Meßrohr; und
- Fig. 4: eine, insb. auch für eine Implementierung in einer Meßgerät-Elektronik gemäß Fig. 2 geeignete bzw. der Verifikation nämlicher Meßgerät-Elektronik dienende, Teilschaltung mit zwei Taktgeneratoren, mit einem Zähler für mittels der zwei Taktgeneratoren generierte (Referenz-)Taktsignale und einem Komparator für den Vergleich eines vom Zähler gelieferten Zählergebnis mit einem dafür vorgegebene Referenzwert.

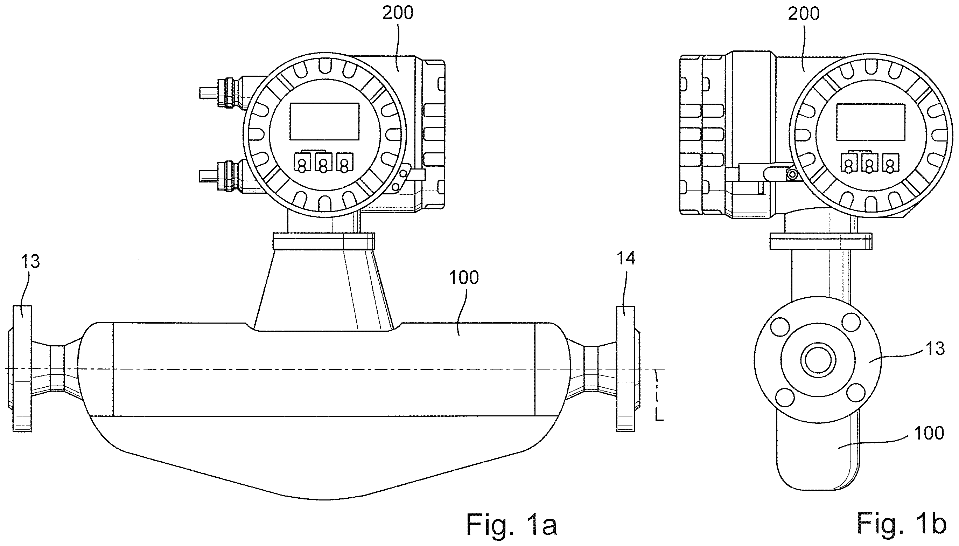

In den Fig. 1 ist ein Ausführungsbeispiel eines, insb. für die Verwendung in der industriellen Meß- und Automatisierungstechnik geeigneten, Meßgeräts schematisch dargestellt. Das Meßgerät dient dazu, wenigstens eine physikalischen und/oder chemischen Meßgröße eines in einer Leitung, wie etwa einer Rohrleitung oder einem Gerinne, geführten bzw. in einem Behälter, wie etwa einem Tank oder einem Gerinne, vorhaltbaren Mediums, wie etwa einem Pulver, einer niedrigviskosen Flüssigkeit, einer hochviskosen Paste und/oder einem Gas etc., zu messen und kann - wie hier gezeigt - beispielsweise als In-Line-Meßgerät, nämlich ein in den Verlauf einer - hier nicht dargestellten- Rohrleitung einsetzbares - Meßgerät realisiert sein. Meßgröße kann demnach beispielsweise eine Massendurchflußrate oder einen totalisierten Massendurchfluß eines in einer Rohrleitung strömenden Mediums, wie etwa einer Flüssigkeit, einem Pulver, einem Gas etc., oder aber z.B. auch ein Füllstand einer Flüssigkeit in einem Tank sein. Alternativ oder in Ergänzung kann die Meßgröße ferner beispielsweise auch eine Dichte ρ und/oder eine Viskosität η eines Mediums der vorgenannten Art sein.

Zum Erfassen der wenigstens eine Meßgröße weist das Meßgerät einen mit dem zu messenden Medium in Wechselwirkung stehenden - hier in den Verlauf einer (nicht dargestellten) Rohrleitung einfügbaren, im Betrieb vom zu messenden Medium durchströmten - Meßwandler MW zum Wandeln der wenigstens einen Meßgröße in wenigstens ein davon abhängiges Meßsignal sowie eine mit dem Meßwandler MW elektrisch gekoppelte Meßgerät-Elektronik ME zum Ansteuern des Meßwandlers und zum Auswerten von vom Meßwandler gelieferten Meßsignalen, mithin dem wenigstens einen von der wenigsten einen Meßgröße abhängigen Meßsignal. Im besonderen ist hierbei vorgesehen, daß das Meßgerät als ein zeit- und/oder ein frequenzbasiert messendes, nämlich die Meßwerte auf Basis einer ausgemessenen Frequenz, einer ausgemessenen Periodendauer, einem ausgemessenen Phasenwinkel und/oder einem ausgemessenen zeitlichen Abstand von ausgewählten Referenzwerten des wenigstens einen Meßsignals ermittelndes Meßgerät realisiert ist, beispielsweise also ein Coriolis-Massendurchfluß-Meßgerät, ein Ultraschall-Durchflußmeßgerät, ein Wirbel-Durchflußmeßgerät, ein Ultraschall-Füllstandsmeßgerät, Mikrowellen-Füllstandsmeßgerät oder ein Füllstandsgrenzschalter mit vibrierendem Tauchkörper ist. In entsprechender Weise kann der Meßwandler z.B. sein: ein Ultraschall-Meßaufnehmer zum Erfassen einer mit einer Strömungsgeschwindigkeit eines in einer Leitung strömenden Fluids oder mit einem Füllstand eines in einem Behälter vorgehaltenen Füllguts korrelierten Echolaufzeit von Ultraschallwellen, ein Wirbelfrequenz-Aufnehmer zum Erfassen einer mit einer Strömungsgeschwindigkeit eines in einer Leitung strömenden Fluids korrelierten Ablösefrequenz von Karman'schen Wirbeln, ein Mikrowellenmodul mit Antenne bzw. Goubon-Leitung zum Erfassen einer mit einem Füllstand eines in einem Behälter vorgehaltenen Füllguts korrelierten Echolaufzeit elektromagnetischer Mikrowellen oder ein Meßwandler vom Vibrationstyp mit vibrierendem Meßrohr zum Erfassen einer Phasenverschiebung von örtlichen Vibrationen des Meßrohrs, die mit einer Massendurchflußrate eines durch nämliches Meßrohr strömenden Mediums korreliert ist und/oder zum Erfassen einer Vibrationsfrequenz, die mit einer Dichte des im Meßrohr befindlichen Mediums korreliert.

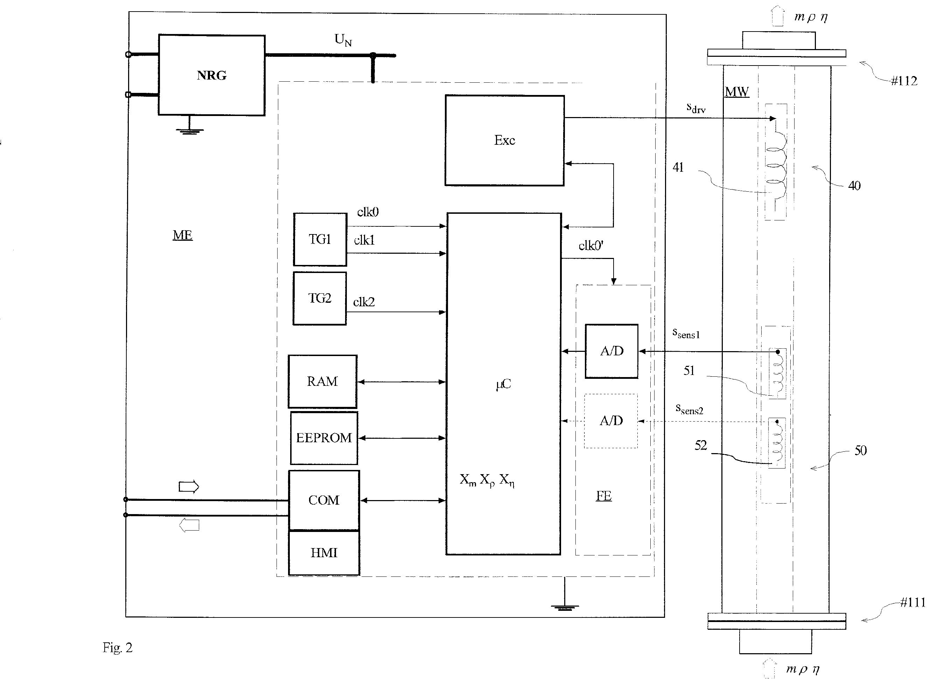

Fig. 2 zeigt im weiteren schematisch nach Art eines Blockschaltbildes ein Ausführungsbeispiel für eine, beispielsweise im Betrieb von extern via Anschlußkabel und/oder mittels interner Energiespeicher mit elektrischer Energie versorgte, Meßgeräts der in Rede stehenden Art mit einer Meßgerät-Elektronik und daran angeschlossenem - hier exemplarisch als ein Meßwandler vom Vibrationstyp mit zumindest einem in den Verlauf einer Rohrleitung einfügbaren, im Betrieb von zu messendem Medium durchströmten, vibrierengelassenem Meßrohr ausgebildeten - Meßwandler. Die Meßgerät-Elektronik weist eine dem Ansteuern des Meßwandlers - hier nämlich dem aktiven Anregen von Vibrationen des Meßrohrs - dienende Treiber-Schaltung Exc sowie eine das wenigstens eine - hier als Vibrationen des wenigstens einen Meßrohrs repräsentierenden Schwingungssignal ausgebildete - Meßsignal des Meßwandlers MW verarbeitende, nämlich mittels wenigstens eines von einem Arbeitstaktsignal clk0 getakteten Prozessors gebildete Meß- und Auswerte-Schaltung µC auf, die im Betrieb unter Verwendung des Arbeitstaktsignals clk0 als Referenz, beispielsweise also als Zeitbasis bzw. Frequenznormal, sowie des wenigstens eine Meßsignals die wenigstens eine Meßgröße, wie z.B. eine momentane Massendurchflußrate oder einen über einen bestimmten Zeitraum totalisierten Massendurchfluß, repräsentierende Meßwerte liefert. Der wenigstens eine Prozessor kann, wie bei modernen Meßgeräten bzw. Meßgerät-Elektroniken der in Rede stehenden Art durchaus üblich, beispielsweise mittels eines Mikroprozessors und/oder mittels eines digitalen Signalprozessors (DSP) gebildet sein. Für derartige Anwendungen geeignete Prozessoren sind z.B. solche vom Typ SAM7SE der Firma ATMEL Corp.

Zum Erzeugen des den Prozessor taktenden Arbeitstaktsignals clk0 ist in der Meßgerät-Elektronik ferner ein erster Taktgenerator TG1 vorgesehen. Der Taktgenerator TG1 ist dabei so eingerichtet, daß damit generierte Arbeitstaktsignal clk0 nominell eine konstante Taktfrequenz f_{clk0_SOLL} aufweist. Der Taktgenerator TG1 kann beispielsweise mittels eines Quarzoszillators und/oder mittels einer PLL-Schaltung (phase locked loop) und/oder mittels einer FLL-Schaltung (frequency locked loop) gebildet sein, beispielsweise als integrale Komponente des Prozessors selbst oder auch als eine peripher des Prozessors realisierte separate Baugruppe.

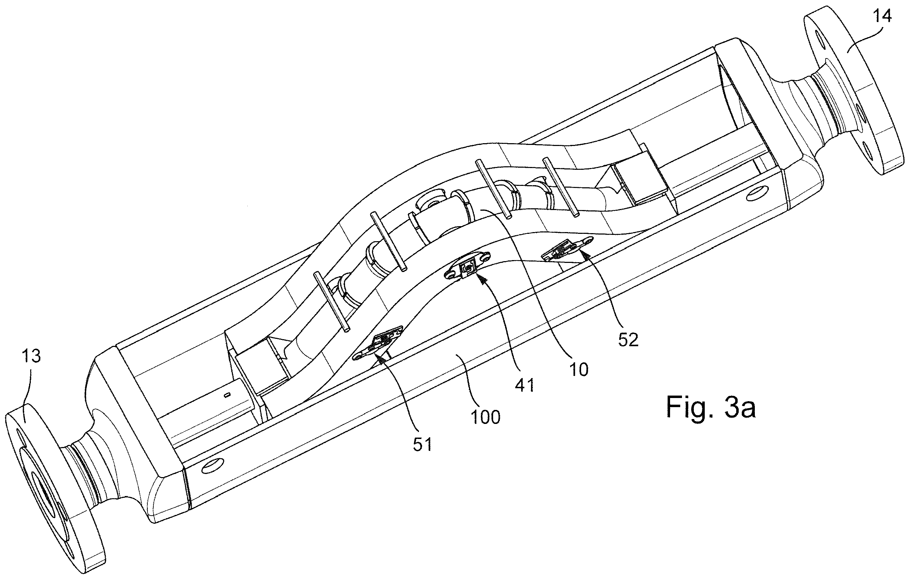

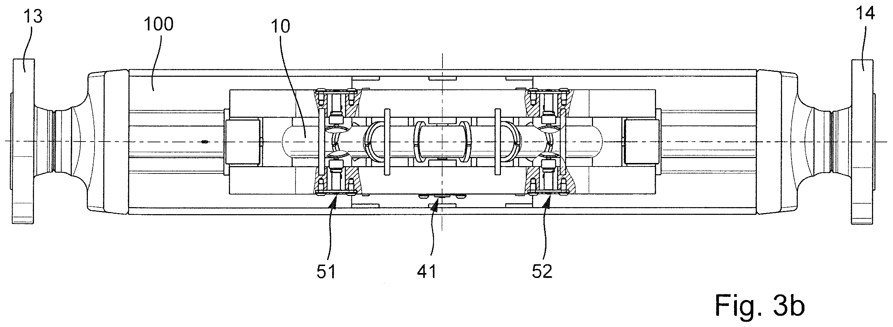

Zur weiteren Erläuterung des technischen Umfelds der vorliegenden Erfindung ist in den Fig. 3a und 3b in unterschiedlichen Darstellungen stellvertretend ein Ausführungsbeispiel für einen - beispielsweise für die Verwendung in einem Coriolis-Massedurchfluss-, einem Dichte- und/oder einem Viskositäts-Meßgerät für strömende Medien geeigneten - Meßwandler vom Vibrationstyp, gezeigt. Der - vornehmlich dem Erfassend von Meßgrößen strömender Medien dienende - Meßwandler MW ist im Betrieb in den Verlauf einer vom jeweils zu messenden, etwa pulvrigen, flüssigen, gasförmigen oder dampfförmigen, Medium durchströmten - hier nicht dargestellten - Rohrleitung eingesetzt und dient bekanntlich dazu, in einem hindurchströmenden Medium solche mechanische Reaktionskräfte, insb. von der Massenduchflußrate abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßwandler zurückwirken. Abgeleitet von diesen das Medium beschreibenden Reaktionskräften können mittels in der Meßgerät-Elektronik entsprechend implementierten Meß- und Auswerte-Verfahren in der dem Fachmann bekannten Weise z.B. die m Massendurchflußrate, mithin der Massendurchfluß, und/oder die Dichte ρ und/oder eine Viskosität η des Mediums gemessen werden.

Zum Führen von strömendem Mediums umfaßt ein solcher Meßwandler vom Vibrationstyp generell wenigstens ein in einem Meßwandler-Gehäuse 100 untergebrachtes - im in den Fig. 3a und 3b gezeigten Ausführungsbeispiel einziges zumindest abschnittsweise gekrümmtes - Meßrohr 10, das sich zwischen einem einlaßseitigen ersten Meßrohrende 11# und einem auslaßseitigen zweiten Meßrohrende 12# mit einer Nutz-Schwinglänge erstreckt und zum Erzeugen vorgenannter Reaktionskräfte im Betrieb zumindest zeitweise aktiv zu mechanischen Schwingungen angeregt über seine Nutz-Schwinglänge vibrieren gelassen und dabei, um eine statische Ruhelage oszillierend, wiederholt elastisch verformt wird. Die Nutz-Schwinglänge entspricht hierbei einer Länge einer innerhalb von Lumen verlaufende gedachte Mittel- oder auch Schwerelinie (gedachte Verbindungslinie durch die Schwerpunkte aller Querschnittsflächen des Meßrohrs), im Falle eines gekrümmten Meßrohrs also einer gestreckten Länge des Meßrohrs 10. Der Meßwandler ähnelt in seinem mechanischen Aufbau wie auch seinem Wirkprinzip dem in den US-B 73 60 451 oder der US-B 66 66 098 vorgeschlagenen bzw. auch den seitens der Anmelderin unter der Typbezeichnung "PROMASS H", "PROMASS P" oder "PROMASS S" käuflich angebotenen Meßwandlern - zur Realisierung der Erfindung können selbstverständlich auch andere Meßwandler dienen, im Falle von Meßwandlern vom Vibrationstyp also auch solche mit geradem und/oder mehr als einem Meßrohr, beispielsweise also zwei oder vier Meßrohren oder auch solche vergleichbar in den eingangs erwähnten US-A 2010/0236338, US-A 2010/0242624, US-A 2010/0242623, US-A 60 06 609, US-B 65 13 393, US-B 70 17 424, US-B 68 40 109, US-B 69 20 798, US-A 57 96 011, US-A 57 31 527 oder US-A 56 02 345 gezeigten oder beispielsweise auch den seitens der Anmelderin unter der Typbezeichnung "PROMASS I", "PROMASS M" bzw. "PROMASS E" oder "PROMASS F" käuflich angebotenen Meßwandlern. Demnach kann der als Meßwandler vom Vibrationstyp ausgebildete Meßwandler auch ein einziges gerades Meßrohr oder wenigstens zwei, beispielsweise mittels eines einlaßseitigen Strömungsteilers und eines auslaßseitigen Strömungsteilers, ggf. zusätzlich auch noch mittels ein- und auslaßseitiger Koppelelemente, miteinander mechanisch gekoppelte und/oder einander baugleiche und/oder gekrümmte und/oder zueinander parallele, Meßrohre zum Führen von zu messendem Medium aufweisen, die im Betrieb zum Erzeugen der Schwingungssignale zumindest zeitweise vibrieren, etwa frequenzgleich auf einer gemeinsamen Schwingfrequenz, jedoch zueinander gegenphasig.

Für den für einen solchen Meßwandler vom Vibrationstyp typischen Fall, daß nämlicher Meßwandler MW lösbar mit der, beispielsweise als metallische Rohrleitung ausgebildeten, Prozeßleitung zu montieren ist, sind einlaßseitig des Meßwandlers einer erster Anschlußflansch 13 für den Anschluß an ein Medium dem Meßwandler zuführendes Leitungssegment der Prozeßleitung und auslaßseitig ein zweiter Anschlußflansch 14 für ein Medium vom Meßwandler abführendes Leitungssegment der Prozeßleitung vorgesehen. Die Anschlußflansche 13, 14 können dabei, wie bei Meßwandlern der beschriebenen Art durchaus üblich auch endseitig in das Meßwandlergehäuse 100 integriert sein.

Bei Meßwandlern vom Vibrationstyp werden die für das Erfassen der Meßgröße erforderlichen Reaktionskräfte im jeweils zu messenden Medium bekanntlich durch Vibrierenlassen des wenigstens einen Meßrohrs in einem aktiv angeregten Schwingungsmode, dem sogenannten Nutzmode, bewirkt. Als Nutzmode wird dabei, wie bei Meßwandlern der in Rede stehenden Art durchaus üblich, wenigstens einer von einer Vielzahl von dem wenigstens einen Meßrohr innewohnenden, natürlichen Schwingungsmoden gewählt, in denen nämliches Meßrohr im Bereich seiner Meßrohrenden jeweils einen Schwingungsknoten und im Bereich seiner Nutzschwinglänge wenigstens einen Schwingungsbauch aufweisende Resonanz-Schwingungen um eine Ruhelage ausführt bzw. ausführen kann, deren jeweilige Schwingungsform wie auch deren jeweilige Resonanzfrequenz bekanntlich maßgeblich auch von Mediumsparametern des im Meßrohr strömenden Mediums, insb. dessen momentaner Dichte und Viskosität, abhängig sind. Nicht zuletzt infolge der dieser Abhängigkeit vom durch das wenigstens eine Meßrohr, mithin den Meßwandler im Betrieb hindurchströmenden Medium sind die natürlichen Schwingungsmoden im Betrieb des Meßwandlers in erheblichem Maße veränderlich. Je nach Bauart, Anwendung und Meßbereich können die Resonanzfrequenzen dabei innerhalb eines sich durchaus im Bereich einiger 100Hz oder sogar im Kilohertz-Bereich bewegenden Nutz-Frequenzbandes variieren. Bei Anregung des wenigstens einen Meßrohrs auf einer seiner momentanen Eigen- oder auch Resonanzfrequenzen kann somit einerseits anhand der momentan angeregten Schwingungsfrequenz eine mittlere Dichte des durch das wenigstens eine Meßrohr momentane strömenden Mediums leicht ermittelt werden. Anderseits kann so auch die für die Aufrechterhaltung der im Nutzmode angeregten Schwingungen momentan erforderliche elektrische Leistung minimiert werden.

Zum aktiven Anregen von Vibrationen des wenigstens einen Meßrohrs, insb. auch jenen im vorgenannten Nutzmode, umfaßt der hier gezeigte Meßwandler ferner eine mittels wenigstens eines mit dem wenigstens eine Meßrohr in Wirkverbindung stehenden elektro-mechanischen, beispielsweise elektro-dynamischen, Schwingungserregers 41 gebildete Erregeranordnung 40, die dazu dient, das wenigstens eine Meßrohr betriebsgemäß zumindest zeitweise in für die konkrete Messung jeweils geeignete Schwingungen im Nutzmode, beispielsweise von Biegeschwingungen in einem natürlichen Biegeschwingungsmode, mit jeweils für die Erzeugung und die Erfassung der oben genannten Reaktionskräfte im Medium ausreichend großen Schwingungsamplitude zu versetzen bzw. nämliche Schwingungen aufrechtzuerhalten. Der wenigstens eine - etwa elektrodynamischen, nämlich mittels Tauchankerspule gebildete - Schwingungserreger 41, mithin die Erregeranordnung 40, dient hierbei im besonderen dazu, eine von der Meßgerät-Elektronik mittels wenigstens eines elektrischen Treibersignals S_{drv} eingespeiste elektrische Erregerleistung P_{exc} in, z.B. pulsierende oder harmonische, also im wesentlichen sinusförmige, Erregerkräfte F_{exc} zu konvertieren, die entsprechend auf das wenigsten eine Meßrohre wirken und somit die gewünschten Schwingungen im Nutzmode bewirken. Beispielsweise kann das wenigstens eine Treibersignal gleichzeitig auch eine Vielzahl von sinusförmigen Signalkomponenten mit voneinander verschiedener Signalfrequenz aufweisen, von denen eine - etwa eine zumindest zeitweise hinsichtlich einer Signalleistung dominierende - Signalkomponente eine einer momentanen Resonanzfrequenz eines als Nutzmode gewählten natürlichen Schwingungsmodes entsprechende Signalfrequenz aufweist.

Die - durch Konvertierung von in die Erregeranordnung eingespeister elektrischer Erregerleistung P_{exc} generierten - Erregerkräfte F_{exc} können dabei in dem Fachmann an und für sich bekannter Weise, mittels der in der Meßgerät-Elektronik ME vorgesehenen - hier letztlich das Treibersignal liefernden - Treiberschaltung Exc entsprechend eingestellt werden, etwa mittels in der Treiberschaltung implementierten, eine Amplitude (Stromstärke) eines Stromes des Treibersignals regelnder Strom- und/oder eine Amplitude (Spannungshöhe) einer Spannung des Treibersignals Spannungs-Reglern hinsichtlich ihres Betrags und, z.B. mittels einer in Betriebsschaltung gleichfalls vorgesehenen Phasen-Regelschleife (PLL - phase locked loop), hinsichtlich ihrer momentanen Frequenz oder im Falle multifrequenter Anregung hinsichtlich ihrer momentanen Frequenzen, vgl. hierzu beispielsweise auch die US-A 48 01 897 oder die US-B 63 11 136. Der Aufbau und die Verwendung vorgenannter Phasenregel-Schleifen zum aktiven Anregen von Meßrohren zu Schwingungen auf einer ihrer mechanischen Eigenfrequenzen ist z.B. in der US-A 48 01 897 ausführlich beschrieben. Selbstverständlich können auch andere für das Einstellen der Erregerenergie E_{exc} geeignete, dem Fachmann an und für sich bekannte Treiberschaltungen verwendet werden, beispielsweise auch gemäß der dem eingangs erwähnten Stand der Technik, etwa der eingangs erwähnten US-A 47 77 833, US-A 48 01 897, US-A 48 79 911, US-A 50 09 109, US-A 50 24 104, US-A 50 50 439, US-A 58 04 741, US-A 58 69 770, US-A 6073495 oder US-A 63 111 36. Ferner sei hinsichtlich einer Verwendung solcher Treiberschaltungen für Meßwandler vom Vibrationstyp auf die mit Meßumformern der Serie "PROMASS 83" bereitgestellte Meßgerät-Elektroniken verwiesen, wie sie von der Anmelderin beispielsweise in Verbindung mit solchen Meßwandlern vom Vibrationstyp, nämlich Meßwandlern der Serie "PROMASS E", "PROMASS F", "PROMASS H", "PROMASS I", "PROMASS P" oder "PROMASS S" angeboten werden. Deren Treiberschaltung ist beispielsweise jeweils so ausgeführt, daß Biegeschwingungen im Nutzmode auf eine konstante, also auch von der Dichte, p, weitgehend unabhängige Amplitude geregelt werden.

Zum Erfassen von Vibrationen des wenigstens einen Meßrohrs 10, nicht zuletzt auch den mittels des wenigstens eine Schwingungserregers aktiv angeregten, weist der Meßwandler MW ferner eine entsprechende Sensoranordnung 50 auf. Diese umfaßt, wie auch in den Fig. 3a, 3b schematische dargestellt, einen - hier vom wenigstens einen Schwingungserreger beabstandet - am wenigstens einen Meßrohr 10 angeordneten, beispielsweise elektrodynamischen, ersten Schwingungssensor 51, der ein Vibrationen des Meßrohrs 10 repräsentierendes, als Meßsignal des Meßwandlers dienendes erstes Schwingungssignal Sₛₑₙₛ₁ liefert, beispielsweise einer mit den Schwingungen korrespondierende elektrische (Wechsel-)Spannung mit einer von einer momentanen Amplitude der Schwingungen des wenigstens Meßrohrs abhängigen Amplitude (Spannungshöhe). Das Schwingungssignal sₛₑₙₛ₁ selbst kann grundsätzlich eine Vielzahl von hinsichtlich ihrer Signalfrequenz verschiedenen Signalkomponenten enthalten, nicht zuletzt auch solche, die mit den aktiv angeregten und insoweit erwünschten Schwingungen des wenigstens einen Meßrohrs korrespondieren. Ferner kann die Sensoranordnung, wie bei derartigen - etwa auch der Erfassung der Massendurchflußrate dienenden - Meßwandlern vom Vibrationstyp üblich, einen vom ersten Schwingungssensor 52 beabstandet am wenigstens einen Meßrohr 10 angeordneten, beispielsweise elektrodynamischen und zum ersten Schwingungssensor 51 baugleichen, zweiten Schwingungssensor 52 aufweisen, der ein ebenfalls Vibrationen des Meßrohrs 10 repräsentierendes, als ein weiteres Meßsignal des Meßwandlers dienendes zweites Schwingungssignal sₛₑₙₛ₂ liefert.

Der wenigstens eine Schwingungssensor 51, mithin die damit gebildete Sensoranordnung 50 ist ferner, wie bei derartigen Meßwandlern üblich, in geeigneter Weise mit einer in der Meßgerät-Elektronik entsprechend vorgesehenen - hier nämlich auch mittels des wenigstens einen Prozessors µC gebildeten - Meß- und Auswerteschaltung gekoppelt, beispielsweise drahtgebunden via Verbindungsleitungen. Das wenigstens eine vom Meßwandler gelieferte - hier also als Schwingungssignal ausgebildete - Meßsignal ist, wie auch in Fig. 2 gezeigt, der Meßgerät-Elektronik ME und daselbst dann der darin vorgesehenen Meß- und Auswerteschaltung zugeführt. Es versteht sich dabei praktisch von selbst, daß das wenigstens eine Schwingungssignal bzw. die Schwingungssignale sₛₑₙₛₑ₁, sₛₑₙₛₑ₂ für eine Verarbeitung im Prozessor, mithin der damit gebildeten Meß- und Auswerteschaltung, in geeigneter Weise zu konditionieren, insb. mittels entsprechender A/D-Wandler in entsprechende Digitalsignale umzuwandeln sind, vgl. hierzu beispielsweise die eingangs erwähnten US-B 63 11 136 oder US-A 60 73 495 oder auch vorgenannten Meßumformer der Serie "PROMASS 83". Dementsprechend wird das wenigstens eine Meßsignal mittels einer entsprechenden, nämlich einen Analog-zu-digital-Wandler A/D aufweisenden Eingangsschaltung FE der Meßgerät-Elektronik zunächst vorverarbeitet, insb. vorverstärkt, gefiltert und digitalisiert, um hernach mittels des Prozessors geeignet ausgewertet werden zu können, nämlich in die eingangs erwähnten, beispielsweise eine Massedurchflußrate, einen totalisierten Massendurchfluß und/oder eine Dichte und/oder eine Viskosität des zu messenden Mediums repräsentierende, Meßwerte gewandelt zu werden; dies ggf. auch unter Berücksichtung mittels des wenigstens einen Treibersignals in die Erregeranordnung eingespeister, mithin auch darin umgesetzter elektrischer Erregerleistung. Dabei das kann Arbeitstaktsignal clk0 ferner auch dazu verwendet werden, die Eingangsschaltung FE bzw. darin vorgesehenen A/D-Wandler abgestimmt auf den Arbeitstakt des Prozessors zu takten bzw. als Basis für ein entsprechendes Arbeitstaktsignal clk0' für die Eingangsschaltung FE zu dienen.

Als Eingangsschaltung FE wie auch als Meß- und Auswerteschaltung µC können im übrigen etablierte, etwa in herkömmlichen Coriolis-Massedurchfluß-Meßgeräten zwecks Konvertierung der Schwingungssignale verwendete bzw. Ermittlung von Massendurchflußraten und/oder totalisierten Massendurchflüssen etc. bereits eingesetzte, Schaltungstechnologien bzw. Regelungs- bzw. Auswerteprogramme angewendet werden. Die Programm-Codes für solche der Steuerung des Meßwandlers dienende Regelungsprogramme und/oder der Generierung von Meßwerten dienende Auswerteprogramme können z.B. in einem, ggf. der Speicherung von mittels des Meßgeräts generierten Meßwerten über einen längeren Zeitraum dienenden, nicht-flüchtigen Datenspeicher EEPROM der Meßgerät-Elektronik persistent gespeichert sein und beim Aufstarten der Meßgerät-Elektronik in einen, z.B. im Prozessor integrierten, flüchtigen Datenspeicher RAM geladen werden. Gleichermaßen können mittels der Meßgerät-Elektronik ME im Betrieb generierte Meßwerte in einen solchen, ggf. auch denselben, flüchtigen Datenspeicher RAM geladen und für eine spätere Weiterverarbeitung entsprechend vorgehalten werden.

Im Falle einer Verwendung in einem Coriolis-Massedurchfluß-Meßgerät dient die Meßgerät-Elektronik im besonderen dazu, unter Verwendung der vom Meßwandler bei anteilig in Nutz- und Coriolismode schwingendem Meßrohr 10 generierten Meßsignalen, nämlich anhand einer zwischen den Schwingungssignalen sₛₑₙₛ₁, sₛₑₛₙ₂ des ersten und zweiten Schwingungssensors 51, 52 detektierten Phasendifferenz, wiederkehrend einen Massendurchfluß-Meßwert Xₘ zu ermitteln, der die zu messenden Massendurchflußrate, m, des durch den Meßwandler geführten Mediums möglichst genau repräsentiert. Alternativ oder in Ergänzung dazu kann die Meß- und Auswerteschaltung, wie bei mittels eines Meßwandlers vom Vibrationstyp gebildeten Meßgeräten durchaus üblich, ggf. auch dazu verwendet werden, einen die Dichte des Mediusm repräsentierenden Dichte-Meßwert Xp und/oder einen eine Viskosität des Mediusm repräsentiereden Viskositäts-Meßwert X_{η} zu ermitteln, vgl. hierzu auch die eingangs erwähnten US-B 72 84 449, US-B 70 17 424, US-B 69 10 366, US-B 68 40 109, US-A 55 76 500 oder US-B 66 51 513.

Die mittels der Meß- und Auswerteschaltung generierten Meßwerte können beispielsweise vor Ort angezeigt werden. Zum Visualisieren von Meßgerät intern erzeugten Meßwerten und/oder gegebenenfalls Meßgerät intern generierten Systemstatusmeldungen, wie etwa einer Fehlermeldung oder einem Alarm, vor Ort kann das Meßgerät beispielsweise ein mit der Meßgerät-Elektronik kommunizierendes, ggf. auch portables, Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise auch fernparametrierbare, Meßgerät-Elektronik ferner so ausgelegt sein, daß sie im Betrieb des Meßgeräts mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meß- und/oder Systemdiagnosewerte oder der Steuerung des Meßgeräts dienende Einstellwerte. Des weiteren kann die Meßgerät-Elektronik ME so ausgelegt sein, daß sie von einer externen Energieversorgung, beispielsweise auch über das vorgenannte Feldbussystem, gespeist werden kann. Für den Fall, daß das Meßgerät 1 für eine Ankopplung an ein Feldbus- oder ein anderes Kommunikationssystem vorgesehen ist, kann die, beispielsweise auch vor Ort und/oder via Kommunikationssystem (re-)programmierbare, Meßgerät-Elektronik ME zu dem eine entsprechende Kommunikations-Schnittstelle für eine Datenkommunikation aufweisen, z.B. zum Senden von Meß- und/oder Betriebsdaten, mithin die wenigstens eine Meßgröße repräsentierenden Meßwerte, an die bereits erwähnte speicherprogrammierbare Steuerung oder ein übergeordnetes Prozeßleitsystem und/oder zum Empfangen von Einstelldaten für das Meßgerät. Nicht zuletzt für den Fall, daß das Meßgerät für eine Ankopplung an ein Feldbus- oder ein anderes Kommunikationssystem vorgesehen ist, weist die Meßgerät-Elektronik ME daher ferner eine für eine Datenkommunikation gemäß einem der einschlägigen Industriestandards ausgebildete Kommunikations-Schnittstelle COM auf. Darüberhinaus kann die Meßgerät-Elektronik ME beispielsweise eine solche interne Energieversorgungsschaltung NRG aufweisen, die im Betrieb von einer im vorgenannten Datenverarbeitungssystem vorgesehen externen Energieversorgung über das vorgenannte Feldbussystem gespeist wird. Hierbei kann die Meßgerät-Elektronik ferner z.B. so ausgebildet sein, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann; das Meßgerät kann aber beispielsweise auch als sogenanntes Vierleiter-Meßgerät ausgebildet sein, bei dem die interne Energieversorgungsschaltung NRG der Meßgerät-Elektronik ME mittels einem ersten Paars Leitungen mit einer externen Energieversorgung und die interne Kommunikationsschaltung COM der Meßgerät-Elektronik ME mittels eines zweiten Paars Leitungen mit einer externen Datenverarbeitungsschaltung oder einem externen Datenübertragungssystem verbunden ist.

Die Meßgerät-Elektronik, mithin die Treiber-Schaltung Exc und die Meß- und Auswerteschaltung µC sowie weitere, dem Betrieb des Meßgeräts dienende Elektronik-Komponenten der Meßgerät-Elektronik, wie etwa die erwähnte interne Energieversorgungsschaltung NRG zum Bereitstellen interner Versorgungsspannungen U_{N} und/oder die erwähnte, dem Anschluß an ein übergeordnetes Meßdatenverarbeitungssystem und/oder einem Feldbus dienende Kommunikationsschaltung COM, sind ferner in vorteilhafter Wiese in einem entsprechenden, insb. schlag- und/oder auch explosionsfest und/oder hermetisch dicht ausgebildeten und/oder modular aufgebauten, Elektronikgehäuse 200 untergebracht. Das Elektronik-Gehäuse kann beispielsweise vom Meßwandler entfernt angeordnet oder, wie in Fig. 1a, 1b gezeigt, unter Bildung eines einzigen Kompaktgeräts direkt am Meßwandler MW, beispielsweise von außen am Aufnehmer-Gehäuse 100 fixiert sein. Bei dem hier gezeigten Ausführungsbeispiel ist daher am Aufnehmer-Gehäuse 100 ferner ein dem Haltern des Elektronik-Gehäuses 200 dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für elektrische Verbindungsleitungen zwischen Meßwandler MW, hier beispielsweise also den darin plazierten Schwingungserregern und -sensoren, und der Meßgerät-Elektronik ME angeordnet sein.

Wie bereits eingangs erwähnt ist es bei Meßgerät-Elektroniken der in Rede stehenden Art, mithin damit gebildeten Meßgeräten - nicht zuletzt aber auch solchen, die zeit- und/oder ein frequenzbasiert messen - von immenser Bedeutung, daß das den Prozessor taktende, schlußendlich als Referenz, nämlich als Zeitbasis bzw. Frequenznormal, für das wenigstens eine Meßsignal bzw. die davon abgeleiteten Meßwerte dienende Arbeitstaktsignal clk0 im Betrieb, nämlich bei allen für das Meßgerät spezifizierten Betriebsbedingungen, stets eine momentane Taktfrequenz aufweist, die genau der nominellen Taktfrequenz f_{clk0_SOLL} entspricht, mithin über einen möglichst weiten Betriebsbereich und eine möglichst lange Betriebsdauer verläßlich konstant ist. Anders gesagt, ist für die Einhaltung der für das jeweilige Meßgerät ausgewiesenen Meßgenauigkeit essentiell, daß der Taktgenerator in hohem Maße stets gleichmäßig läuft, nämlich ein Arbeitstaktsignal mit nicht (bzw. allenfalls nicht nennenswert) variierender Taktfrequenz liefert.

Zum Abschätzen eines Risikos, daß der Taktgenerator nämlichen Anforderungen hinsichtlich seiner Präzision nicht mehr genügt, mithin zum Verifizieren der Meßfunktionalität der Meßgerät-Elektronik bzw. zum Validieren der mittels des Meßgeräts schlußendlich erzeugten Meßwerten, auch während des Betriebs des Meßgeräts ist daher bei der erfindungsgemäßen Meßgerät-Elektronik vorgesehen, daß der Taktgenerator TG1 zusätzlich zum Arbeitstaktsignal clk0 weiters auch ein davon abhängiges ersten Referenztaktsignal clk1 mit einer nominell konstanten Taktfrequenz f_{clk1_SOLL} erzeugt, die um ein vorgegebenes Vielfaches V_{clk1} (V_{clk1} = f_{clk0_SOLL} / f_{clk1_SOLL}), insb. mehr als ein Zweifaches (V_{clk1} > 2), kleiner als die Taktfrequenz, f_{clk0_SOLL}, des Arbeitstaktsignals ist. Darüberhinaus weist die Meßgerät-Elektronik einen zweiten Taktgenerator TG2 auf, der eine vom Arbeitstaktsignal clk0 unabhängiges - hier nicht zuletzt als Referenz für das Arbeitstaktsignal clk0 dienendes - zweites Referenztaktsignal clk2 mit einer nominell konstanten Taktfrequenz f_{clk2_SOLL} erzeugt, die ebenfalls um ein vorgegebenes Vielfaches V_{clk2} (V_{clk2} = f_{clk0_SOLL} / f_{clk2_SOLL}), beispielsweise also wiederum mehr als ein Zweifaches (V_{clk2} > 2), kleiner als die Taktfrequenz, f_{clk0_SOLL}, des Arbeitstaktsignals ist. Der Taktgenerator TG2 kann - etwa in Analogie zum Taktgenerator TG1 - beispielsweise mittels eines Quarzoszillators, mittels einer PLL-Schaltung und/oder mittels einer FLL-Schaltung gebildet sein. Nach einer weiteren Ausgestaltung der Erfindung sind die beiden, beispielsweise baugleichen, Taktgeneratoren TG1, TG2 hierbei ferner so eingerichtet, daß die Taktfrequenz des ersten Referenztaktsignals clk1 von der Taktfrequenz des zweiten Referenztaktsignals clk2 verschieden ist, so daß also für die Taktfrequenz beider Referenztaktsignale f_{clk1_SOLL} <> f_{clk2_SOLL}, mithin V_{clk1} <> V_{clk2} gilt; dies im besonderen auch in der Weise, daß die Taktfrequenz des ersten Referenztaktsignals clk1 niedriger ist als die Taktfrequenz des zweiten Referenztaktsignals clk2, mithin f_{clk1_SOLL} < f_{clk2_SOLL} bzw. V_{clk1} > V_{clk2} gilt.

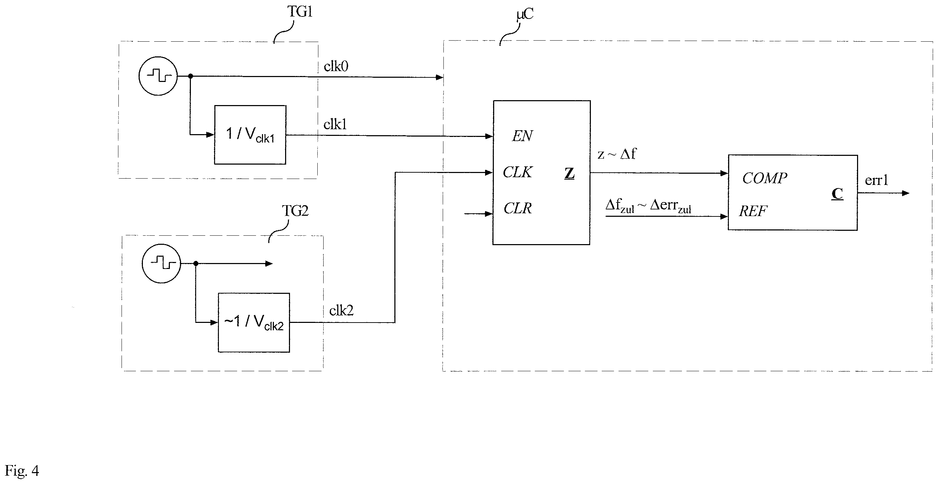

Basierend auf den beiden - zwar unabhängig voneinander generierten, infolge von deren jeweils nominell konstanten Taktfrequenz f_{clk1_SOLL} bzw. f_{clk2_SOLL} dennoch in einer nominell konstanten, mithin invarianten Frequenzbeziehung (f_{clk1_SOLL} / f_{clk2_SOLL} = konstant) zueinander stehenden - Referenztaktsignalen clk1, clk2 kann so durch eine einfache, ggf. wiederkehrend durchgeführte Beobachtung nämlicher Frequenzbeziehung, beispielsweise durch einen simplen Vergleich eines von beiden momentanen Taktfrequenzen f_{clk1_IST}, f_{clk2_lST} abgeleiteten Kennwerts mit einem dafür vorgegebenen Schwellenwert, sehr rasch erkannt werden, daß zumindest einer der beiden Taktgeneratoren TG1, TG2 ein Referenztaktsignal mit einer momentanen Taktfrequenz f_{clk1_IST} bzw. f_{clk2_IST} liefert, die von der dafür jeweils vorgegebenen nominellen Taktfrequenz f_{clk1_SOLL} bzw. f_{clk2_SOLL} um ein vorgegebenes Maß Δf_{zul} oder darüberhinausgehend abweicht, und infolgedessen zu besorgen ist, daß mittels des Prozessors ermittelte Meßwerte über ein dafür vorgegebenes zulässiges bzw. akzeptables Maß Δerr_{zul} ∼ Δf_{zul} hinausgehend fehlerbehaftet sein können, mithin nicht verläßlich sind. Dementsprechend ist der Prozessor nach einer weiteren Ausgestaltung der Erfindung dafür eingerichtet ist, anhand des ersten Referenztaktsignals clk1 sowie anhand des zweiten Referenztaktsignals clk2 festzustellen, ob zumindest einer der beiden Taktgeneratoren ein Referenztaktsignal mit einer momentanen Taktfrequenz, f_{clk1_IST} bzw. f_{clk2_lST}, liefert, die von der dafür jeweils vorgegebenen nominellen Taktfrequenz, f_{clk1_SOLL} bzw. f_{clk2_SOLL}, um ein vorgegebenes Maß Δf_{zul} oder mehr abweicht. Im besonderen ist hierbei ferner vorgesehen, daß der Prozessor einen momentane Frequenz-Unterschied, Δf, definiert als ein Unterschied zwischen der momentanen Taktfrequenz f_{clk1_IST} des ersten Referenztaktsignals clk1 und der momentanen Taktfrequenz f_{clk2_lST} des zweite Referenztaktsignals clk2, zu ermitteln in der Lage ist. Dies nicht zuletzt auch deshalb, um hernach den ermittelten momentanen Frequenz-Unterschied, Δf, mit einem dafür vorgebbaren Schwellenwert zu vergleichen, der einen maximal zulässigen Frequenz-Unterschied Δf_{zul} repräsentiert bzw. basierend auf diesem Vergleich, nämlich falls die momentanen Taktfrequenzen der beiden Referenztaktsignal um mehr als ein vorgegebenes Maß voneinander abweichen und infolgedessen der ermittelte momentane Frequenz-Unterschied Δf den Schwellenwert überschreitet, eine ggf. auch als Alarm und/oder eine weitere Überprüfungen des Meßgeräts veranlassende Fehlermeldung deklarierte, Meldung err1 (bzw. ein dementsprechend codiertes Fehlersignal) zu erzeugen, die signalisiert, das zumindest einer der beiden Taktgeneratoren TG1, TG2 ein Referenztaktsignal liefert, das eine von einer dafür jeweils vorgegebenen nominellen Taktfrequenz abweichenden Taktfrequenz aufweist, daß also vom Prozessor ermittelte Meßwerte über ein vorgegebenes Maß hinausgehend fehlerbehaftet bzw. nicht verläßlich, mithin als invalid zu besorgen sind. Der vorgenannte Vergleich kann, wie in Fig. 4 schematisch dargestellt, auf sehr einfach Weise z.B. mittels eines - etwa im Prozessor implementierten - digitalen Komparators C durchgeführt werden, der den ermittelten Frequenz-Unterschied Δf an einem Vergleichseingang COMP mit dem an einem Referenzeingang REF anliegenden, den vorgegebenen Schwellenwert Δf_{zul} repräsentierenden Zahlenwert zur Laufzeit des Prozessors vergleicht.

Der momentane Frequenz-Unterschied Δf kann beispielsweise mittels des Prozessor µC basierend auf einer mittels der momentanen Taktfrequenz f_{clk1_IST} des ersten Referenztaktsignals clk1 und der momentanen Taktfrequenz f_{clk2_IST} des zweiten Referenztaktsignals clk2 gebildeten Frequenzdifferenz, beispielsweise also so, daß gilt Δf ∼ f_{clk1_IST} - f_{clk2_IST}, und/oder basierend auf einem mittels der momentanen Taktfrequenz des ersten Taktsignals und der momentanen Taktfrequenz des zweiten Taktsignals gebildeten Frequenzquotienten, beispielsweise so, daß gilt Δf ∼ f_{clk1_IST} / f_{clk2_IST}, ermittelt werden. Alternativ oder in Ergänzung kann der Prozessor den momentanen Frequenz-Unterschied Δf überdies z.B. auch basierend auf einer oder mehr der Relationen: Δf ∼ f_{clk2_IST} - f_{clk1_IST}, Δf ∼ f_{clk2_IST} / f_{clk1_IST}, Δf ∼ 1 - f_{clk2_IST} / f_{clk1_IST}, Δf ∼ 1 - f_{clk1_IST} / f_{clk2_IST} ermittelt werden, im übrigen aber praktisch anhand jedweder Funktion, deren schlußendlich nämlich als Maß für den Frequenz-Unterschied dienenden Funktionswerte bei anwachsender Abweichung der beiden Taktfrequenz f_{clk1_IST}, f_{clk2_IST} voneinander entweder größer werden, oder umgekehrt entsprechend kleiner werden.

Der jeweils ermittelte Frequenz-Unterschieds Δf bzw. die anhand dessen ggf. generierte Fehlermeldung err1 können, etwa zwecks Gewährleistung einer seitens des Betreibers der mittels des Meßgeräts gebildeten Meßstelle und/oder seitens der nämliche Meßstelle beaufsichtigenden Behörde eingeforderten Rückverfolgbarkeit von allfälligen Meßgerät- bzw. Meßwert-Fehlern und/oder zwecks einer ausführlichen Dokumentation des Lebenslaufs des Meßgeräts, im erwähnten nicht-flüchtigen Datenspeicher EEPROM der Meßgerät-Elektronik jeweils abgespeichert werden, ggf. also auch in einem entsprechenden Historiedatensatz von über einen längeren Zeitraum wiederkehrend aufgezeichneter Frequenz-Unterschiede Δf bzw. daraus ggf. abgeleiteten Fehlermeldungen err1. In vorteilhafter Weise können hierbei auch zusätzlich jeweils ein einen jeweiligen Zeitpunkt des Ermittelns des (aufgezeichneten) Frequenz-Unterschied Δf bzw. der der Generierung der (aufgezeichneten) Fehlermeldung ausweisenden Datums, beispielsweise also Tag und Uhrzeit, im nicht-flüchtigen Datenspeicher EEPROM jeweils passend mitgespeichert werden.

Zum Ermitteln des momentanen Frequenz-Unterschied Δf kann, wie beispielsweise auch in Fig. 4 schematisch dargestellt, ein, etwa als ein synchroner Dualzähler ausgebildeter, Zähler Z dienen, mit einem Enable-Eingang EN für eines der beiden Referenztaktsignale, beispielsweise also dem ersten Referenztaktsignal clk1, so daß der Zähler Z also von nämlichem Referenztaktsignal gesteuert ist, und mit einem Zähl-Eingang für das andere, nämlich das den Zähler nicht steuernde Referenztaktsignal, beispielsweise also das zweite Referenztaktsignal clk2. Demnach ist das am Zähleingang liegende Referenztaktsignal bevorzugt dasjenige Referenztaktsignal, dessen Taktfrequenz höher ist als die Taktfrequenz des anderen, nämlich des den Zähler steuernden Referenztaktsignals ist. Somit bestimmt also die Taktfrequenz des den Zähler steuernden - niederfrequenteren bzw. "langsameren" - Referenztaktsignals ein Zählintervall, innerhalb dem der Zähler Takte des am Zähleingang liegenden - höherfrequenteren bzw. "schnelleren" - Referenztaktsignals zählt, vorzugsweise jeweils bei eins beginnend. Dementsprechend ist der Prozessor bei dieser Ausgestaltung der Erfindung ferner dafür eingerichtet, anhand eines vom Zähler Z gelieferten Zählergebnisses z für Takte des am Zähleingang CLK liegenden Referenztaktsignals festzustellen, ob zumindest einer der beiden Taktgeneratoren TG1, TG2 ein Referenztaktsignal mit einer momentanen Taktfrequenz, f_{clk1_IST} bzw. f_{clk2_IST}, liefert, die von der dafür jeweils vorgegebenen nominellen Taktfrequenz, f_{clk1_SOLL} bzw. f_{clk2_SOLL}, um das entsprechend vorgegebene Maß Δf_{zul} (Δf_{zul} ∼ Δerr_{zul}) abweicht.

Zwecks einer Vereinfachung des Einstellens eines für den konkreten Anwendungsfall jeweils geeigneten Taktfrequenz-Verhältnisses f_{clk1_SOLL} / f_{clk2_SOLL}, definiert als eine Verhältnis der nominellen Taktfrequenz des ersten Referenztaktsignals zur nominellen Taktfrequenz des zweiten Referenztaktsignals, mithin zum Erzeugen des Referenztaktsignals clk1 mit einer für nämlichen Anwendungsfall optimal angepaßten nominellen Taktfrequenz f_{clk1_SOLL} ist der Taktgenerator TG1 gemäß einer weiteren Ausgestaltung der Erfindung, und wie auch in Fig. 4 schematisch dargestellt, mittels eines - hier nämlich ein dem vorgegebenen Vielfachen V_{clk1} entsprechendes Teilerverhältnis 1/V_{clk1} aufweisenden - Frequenzteiler für das Arbeitstaktsignal clk0 gebildet, der von einem Oszillator, beispielsweise einem Quarzoszillator, einer PLL-Schaltung und/oder einer FLL-Schaltung, angesteuert ist. Alternativ zu dem vorbeschriebnen Fall, daß das Referenztaktsignal clk1 (mittels Frequenzteilung) aus dem Arbeitstaktsignal clk0 abgleitet ist, kann umgekehrt beispielsweise auch das Arbeitstaktsignal clk0 vom ersten Referenztaktsignal clk1 abgeleitet werden, etwa indem der Taktgenerator TG1 einen - z.B. mittels einer PLL-Schaltung und/oder mittels einer FLL-Schaltung gebildeten - Frequenzvervielfacher für das erste Referenztaktsignal clk1 aufweist. Ferner kann auch der zweite Taktgenerator TG2, wie auch in Fig. 4 schematisch dargestelt, zwecks einer möglichst einfachen Einstellen des Taktfrequenz-Verhältnisses f_{clk1_SOLL} / f_{clk2_SOLL} mittels eines von einem Oszillator, beispielsweise also einem Quarzoszillator, einer PLL-Schaltung und/oder einer FLL-Schaltung, angesteuerten Frequenzteiler gebildet sein, der abgestimmt auf das vom ersten Taktgenerator gelieferte Referenztaktsignal sowie das schlußendlich einzustellende Taktfrequenz-Verhältniss f_{clk1_SOLL} / f_{clk2_SOLL} ein zum Teilerverhältnis V_{clk2} entsprechend umgekehrt proportionales Teilerverhältnis 1/V_{clk2} aufweist.

Um von allfällige von der Meßgerät-Elektronik selbst bzw. einzelnen Komponenten davon ausgehende Störeinflüsse, nicht zuletzt auch allfällige Störeinflüsse infolge von zeitlichen Temperaturschwankungen innerhalb der Meßgerät-Elektronik, auf die beiden Taktgeneratoren, mithin die damit jeweils generierten Arbeitstakt- bzw. Referenztaktsignale zu minimieren bzw. weitgehend auszuschließen ist gemäß einer weiteren Ausgestaltung der Erfindung vorgesehen, den ersten Taktgenerator auf einem Trägersubstrat, etwa einer Leiterplatte, anzubringen, das zumindest hinsichtlich seines Wärmeausdehnungskoeffizienten, insb. auch hinsichtlich seiner spezifischen Wärmekapazität und/oder Wärmeleitfähigkeit, gleich ist mit einem Trägersubstrat, auf dem der zweite Taktgenerator angebracht. Dies kann beispielsweise auf einfach gleichwohl effektive Wiese dadurch erreicht werden, indem der erste Taktgenerator und der zweite Taktgenerator beispielsweise auf gemeinsam ein und demselben Trägersubstrat, beispielsweise ein und derselben Leiterplatte, angebracht sind. Ferner kann es, nicht zuletzt auch zur Vermeidung von erhöhten bzw. auch unzulässig hohen Frequenz-Unterschieden (Δf > Δf_{zul}) infolge allfälliger Temperaturgradienten innerhalb der Meßgerät-Elektronik, von Vorteil sein, die beiden Taktgeneratoren TG1, TG2 zumindest im ungestörten, stationären Betriebsfall auf gleicher Betriebstemperatur zu halten, beispielsweise also entlang einer möglichst ortsfest bzw. möglichst invariant in der Meßgerät - Elektronik verlaufenden gemeinsamen Isotherme anzuordnen. Dies kann z.B. dadurch erreicht werden, daß die beiden ggf. auch auf ein und demselben Trägersubstrat angebrachten Taktgeneratoren in einem möglichst geringen Abstand voneinander innerhalb der Meßgerät-Elektronik, mithin innerhalb des Elektronik-Gehäuses, angeordnete sind.

Mit der vorliegenden Erfindung können Meßgerät der vorgenannten Art, insb. auch regelmäßig und/oder ohne Unterbrechung des eigentlichen Meßbetriebs, wiederkehrend also daraufhin überprüft werden, ob das schlußendlich als Basis für die mittels des Prozessors generierten Meßwerten dienende Arbeitstaktsignal verläßlich eine innerhalb der spezifizierten Toleranzgrenzen liegende Taktfrequenz aufweist bzw. aufgewiesen hat, oder ob der das Arbeitstaktsignal liefernde Taktgenerator TG1 ab einem bestimmten Zeitpunkt, etwa infolge von Alterung und/oder äußere Störeinflüsse, als nicht mehr der Spezifikation entsprechend, mithin als nicht mehr verläßlich einzustufen ist. Anders gesagt, kann so im Betrieb sehr einfach, gleichwohl sehr verläßlich eine Abweichung einer momentanen Taktfrequenz, f_{clk0_IST}, des Arbeitstaktsignals von der dafür nominell vorgegebenen Taktfrequenz, f_{clk0_SOLL}, abgeschätzt werden.

## Patentansprüche

1. Meßgerät zum Messen wenigstens einer physikalischen und/oder chemischen Meßgröße eines in einer Leitung, insb. einer Rohrleitung oder einem Gerinne, oder in einem Behälter, insb. einem Tank oder einem Becken, geführten Mediums, welches Meßgerät eine Meßgerät-Elektronik sowie eine mit nämlicher Meßgerät-Elektronik elektrisch gekoppelten Meßwandler zum Wandeln der wenigstens einen Meßgröße in wenigstens ein davon abhängiges Meßsignal umfaßt,
- wobei die Meßgerät-Elektronik
- einen, insb. als Mikroprozessor oder als digitaler Signalprozessor ausgebildeten, Prozessor,
- einen, insb. mittels eines Quarzoszillators und/oder mittels einer PLL-Schaltung und/oder mittels einer FLL-Schaltung gebildeten, ersten Taktgenerator (TG1) zum Erzeugen eines den Prozessor taktenden Arbeitstaktsignals (clk0) mit einer nominell konstanten Taktfrequenz, f_{clk0_SOLL}, und zum Erzeugen eines vom Arbeitstaktsignal (clk0) abhängigen ersten Referenztaktsignals (clk1) mit einer nominell konstanten Taktfrequenz, f_{clk1_SOLL}, die um ein vorgegebenes Vielfaches kleiner als die Taktfrequenz, f_{clk0_SOLL}, des Arbeitstaktsignals ist,
- einen, insb. mittels eines Quarzoszillators gebildeten und/oder mittels einer PLL-Schaltung und/oder mittels einer FLL-Schaltung gebildeten, zweiten Taktgenerator (TG2) zum Erzeugen eines vom Arbeitstaktsignal (clk0) unabhängigen, insb. als Referenz für das Arbeitstaktsignal (clk0) dienenden, zweiten Referenztaktsignals (clk2) mit einer nominell konstanten Taktfrequenz, f_{ck2_SOLL}, die um ein vorgegebenes Vielfaches kleiner als die Taktfrequenz, f_{clk0_SOLL}, des Arbeitstaktsignals ist,
-- sowie einen von einem der beiden Referenztaktsignale gesteuerten Zähler mit einem Zähleingang für das andere, nämlich das den Zähler nicht steuernde Referenztaktsignal aufweist,
- wobei der Prozessor dafür eingerichtet ist, unter Verwendung des Arbeitstaktsignals (clk0) als Referenz, insb. als Zeitbasis, sowie des wenigstens eine Meßsignals einen die wenigstens eine Meßgröße repräsentierenden Meßwert zu ermitteln,
- und wobei der Prozessor dafür eingerichtet ist, anhand eines vom Zähler gelieferten Zählergebnisses für Takte des am Zähleingang liegenden Referenztaktsignals festzustellen, ob zumindest einer der beiden Taktgeneratoren ein Referenztaktsignal mit einer momentanen Taktfrequenz, f_{clk1_IST} bzw. f_{clk2_lST}, liefert, die von der dafür jeweils vorgegebenen nominellen Taktfrequenz, f_{clk1_SOLL} bzw. f_{clk2_SOLL}, um ein vorgegebenes Maß, Δf_{zul}, abweicht.

2. Meßgerät nach einem der vorherigen Ansprüche,
- wobei der erste Taktgenerator (TG1) zum Erzeugen des ersten Referenztaktsignals (clk1) einen Frequenzteiler für das Arbeitstaktsignal (clk0) aufweist; und/oder
- wobei die Taktfrequenz des ersten Referenztaktsignals (clk1) von der Taktfrequenz des zweiten Referenztaktsignals (clk2) verschieden ist, insb. derart, daß die Taktfrequenz des ersten Referenztaktsignals (clk1) niedriger ist als die Taktfrequenz des zweiten Referenztaktsignals (clk2); und/oder
- wobei die beiden, insb. baugleichen, Taktgeneratoren im ungestörten, stationären Betriebsfall auf gleicher Betriebstemperatur gehalten sind; und/oder
- wobei der erste Taktgenerator auf einem Trägersubstrat, insb. einer Leiterplatte, angebracht ist, das zumindest hinsichtlich seines Wärmeausdehnungskoeffizienten gleich ist mit einem Trägersubstrat, insb. einer Leiterplatte, auf dem der zweite Taktgenerator angebracht ist; und/oder
- wobei der erste Taktgenerator und der zweite Taktgenerator auf ein und demselben Trägersubstrat, insb. einer Leiterplatte, angebracht sind.

3. Meßgerät nach einem der vorherigen Ansprüche,
- wobei das am Zähleingang liegende Referenztaktsignal dasjenige Referenztaktsignal ist, dessen Taktfrequenz höher ist als die Taktfrequenz des anderen, nämlich des den Zähler steuernden Referenztaktsignals ist; und/oder
- wobei die Taktfrequenz des den Zähler steuernden Referenztaktsignals ein Zählintervall bestimmt, innerhalb dem der Zähler Takte des am Zähleingang liegenden Referenztaktsignals, insb. beginnend bei eins, zählt.

4. Meßgerät nach einem der vorherigen Ansprüche, wobei der Prozessor dafür eingerichtet ist, anhand des ersten Referenztaktsignals sowie anhand des zweiten Referenztaktsignals festzustellen, ob zumindest einer der beiden Taktgeneratoren ein Referenztaktsignal mit einer momentanen Taktfrequenz, f_{clk1_IST} bzw. f_{clk2_IST}, liefert, die von der dafür jeweils vorgegebenen nominellen Taktfrequenz, f_{clk1_SOLL} bzw. f_{clk2_SOLL}, um ein vorgegebenes Maß, Δf_{zul}, abweicht.

5. Meßgerät nach dem vorherigen Anspruch, wobei der Prozessor dafür eingerichtet ist, unter Verwendung der beiden Referenztaktsignale, eine, insb. als Alarm deklarierte, Meldung zu erzeugen, die signalisiert, das zumindest einer der beiden Taktgeneratoren ein Referenztaktsignal liefert, das eine von der dafür jeweils vorgegebenen nominellen Taktfrequenz, f_{clk1_SOLL} bzw. f_{clk2_SOLL}, abweichende momentane Taktfrequenz, f_{clk1_IST} bzw. f_{clk2_IST}, aufweist.

6. Meßgerät nach einem der vorherigen Ansprüche, wobei der Prozessor dafür eingerichtet ist, einen momentane Frequenz-Unterschied, Δf, definiert als ein Unterschied zwischen der momentanen Taktfrequenz des ersten Referenztaktsignals und der momentanen Taktfrequenz des zweite Referenztaktsignals, zu ermitteln.

7. Meßgerät nach dem vorherigen Anspruch, wobei der Prozessor dafür eingerichtet ist, den ermittelten momentanen Frequenz-Unterschied, Δf, mit einem dafür vorgebbaren Schwellenwert zu vergleichen, der einen maximal zulässigen Frequenz-Unterschied, Δf_{zul}, repräsentiert.

8. Meßgerät nach dem vorherigen Anspruch, wobei der Prozessor dafür eingerichtet ist, falls der ermittelte momentane Frequenz-Unterschied, Δf, den Schwellenwert überschreitet, eine, insb. als Alarm deklarierte, Meldung zu erzeugen, die signalisiert, das zumindest einer der beiden Taktgeneratoren ein Referenztaktsignal liefert, das eine von einer dafür jeweils vorgegebenen nominellen Taktfrequenz abweichenden Taktfrequenz aufweist.

9. Meßgerät nach einem der Ansprüche 6 bis 8,
- wobei der Prozessor den momentanen Frequenz-Unterschied, Δf, basierend auf einer mittels der momentanen Taktfrequenz des ersten Referenztaktsignals und der momentanen Taktfrequenz des zweiten Referenztaktsignals gebildeten Frequenzdifferenz und/oder basierend auf einem mittels der momentanen Taktfrequenz des ersten Taktsignals und der momentanen Taktfrequenz des zweiten Taktsignals gebildeten Frequenzquotienten ermittelt; und/oder
- wobei der Prozessor den momentanen Frequenz-Unterschied basierend auf der Formel: f_{clk1_IST} - f_{clk2_IST} ermittelt; und/oder
- wobei der Prozessor den momentanen Frequenz-Unterschied basierend auf der Formel: f_{clk2_IST} - f_{clk1_IST} ermittelt; und/oder
- wobei der Prozessor den momentanen Frequenz-Unterschied basierend auf der Formel: f_{clk2_IST} / f_{clk1_IST} ermittelt; und/oder
- wobei der Prozessor den momentanen Frequenz-Unterschied basierend auf der Formel: f_{clk1_IST} / f_{clk2_IST} ermittelt; und/oder
- wobei der Prozessor den momentanen Frequenz-Unterschied basierend auf der Formel: 1 - f_{clk2_IST} / f_{clk1_IST} ermittelt; und/oder
- wobei der Prozessor den momentanen Frequenz-Unterschied basierend auf der Formel: 1- f_{clk1_IST} / f_{clk2_IST} ermittelt.

10. Meßgerät nach einem der vorherigen Ansprüche, wobei die Meßgerät-Elektronik weiters umfasst: einen nicht-flüchtigen Datenspeicher (EEPROM) für mittels der Meßgerät-Elektronik generierte Meß- und/oder Betriebsdaten.

11. Meßgerät nach einem der vorherigen Ansprüche, wobei das Meßgerät ein zeit- und/oder ein frequenzbasiert messendes Meßgerät, insb. ein Coriolis-Massendurchfluß-Meßgerät, ein Ultraschall-Durchflußmeßgerät, ein Wirbel-Durchflußmeßgerät, ein Ultraschall-Füllstandsmeßgerät, oder ein Mikrowellen-Füllstandsmeßgerät, ist.

12. Meßgerät nach einem der vorherigen Ansprüche, wobei der Prozessor dafür eingerichtet ist, anhand des ersten Referenztaktsignals clk1 sowie anhand des zweiten Referenztaktsignals clk2 festzustellen, ob zumindest einer der beiden Taktgeneratoren ein Referenztaktsignal mit einer momentanen Taktfrequenz, f_{clk1_IST} bzw. f_{clk2_IST}, liefert, die von der dafür jeweils vorgegebenen nominellen Taktfrequenz, f_{clk1_SOLL} bzw. f_{clk2_SOLL}, um ein vorgegebenes Maß, Δf_{zul}, abweicht.

13. Verfahren zum Überprüfen eines Meßgeräts gemäß einem der vorherigen Ansprüche, insb. zum Verifizieren der Meßfunktionalität von dessen Meßgerät-Elektronik und/oder zum Validieren von mittels des Meßgeräts erzeugten Meßwerten, welches Verfahren umfaßt:
- Erzeugen des Arbeitstaktsignals (clk0) mittels des ersten Taktgenerators und Takten des Prozessors mit dem Arbeitstaktsignal (clk0);
- Erzeugen des ersten Referenztaktsignals (clk1) mittels des ersten Taktgenerators und Erzeugen des zweiten Referenztaktsignals (clk2) mittels des zweiten Taktgenerators (CLK2);
- Erzeugen von die wenigstens eine Meßgröße repräsentierenden Meßwerten mittels des Prozessors, insb. basierend auf dem wenigstens einen Meßsignal sowie dem Arbeitstaktsignal als Zeit- und/oder Frequenzbasis für das wenigstens eine Meßsignal bzw. die Meßwerte;
- Ermitteln eines Frequenz-Unterschied, Δf, der einen Unterschied zwischen der momentanen Taktfrequenz des ersten Referenztaktsignals und der momentanen Taktfrequenz des zweite Referenztaktsignals repräsentiert; sowie
- Generieren einer Fehlermeldung, die signalisiert, daß zumindest einer der beiden Taktgeneratoren ein Referenztaktsignal mit einer momentanen Taktfrequenz liefert, die von einer dafür jeweils vorgegebenen nominellen Taktfrequenz um ein vorgegebenes Maß abweicht, und/oder die signalisiert, daß mittels des Prozessors ermittelte Meßwerte über ein vorgegebenes Maß hinausgehend fehlerbehaftet bzw. nicht verläßlich sind, falls die momentanen Taktfrequenzen des ersten und zweiten Referenztaktsignals um mehr als ein vorgegebenes Maß voneinander abweichen.

14. Verfahren nach dem vorherigen Anspruch, weiters umfassend:
-- einen Schritt des Abspeicherns des ermittelten Frequenz-Unterschieds, Δf, in einem nicht-flüchtigen Datenspeicher (EEPROM) der Meßgerät-Elektronik; und/oder
-- einen Schritt des Abspeicherns der Fehlermeldung in einem nicht-flüchtigen Datenspeicher (EEPROM) der Meßgerät-Elektronik.

15. Verfahren nach dem vorherigen Anspruch, weiters umfassend: einen Schritt des Speicherns eines den Zeitpunkt der Generierung der Fehlermeldung und/oder des Ermittelns des Frequenz-Unterschied, Δf, insb. mit Tag und Uhrzeit, ausweisenden Datums im nicht-flüchtigen Datenspeicher.

## Claims

1. Measuring device designed to measure at least one physical and/or chemical measured variable of a medium conducted through a conduit, particularly a pipe or a channel, or in a vessel, particularly a tank or a basin, said measuring device comprising a measuring device electronics module and a transducer electrically coupled to said measuring device electronics module, said transducer being designed to convert the at least one measured variable to at least a measuring signal dependent upon it;
- wherein the measuring device electronics module comprises
-- a processor, particularly one designed as a microprocessor or as a digital signal processor,
-- a first clock generator (TG1), formed particularly using a quartz oscillator and/or using a PLL circuit and/or using an FLL circuit, said generator being designed to generate a working clock signal (clk0) that times the processor at a nominally constant clock frequency, f_{clk0-SOLL}, and designed to generate a first reference clock signal (clk1), which depends on the working clock signal (clk0), at a nominally constant clock frequency, f_{clk1_SOLL}, which is smaller than the clock frequency, f_{clk0_SOLL}, of the working clock signal by a predefined multiple,
-- a second clock generator (TG2), particularly formed by means of a quartz oscillator and/or a PLL circuit and/or an FLL circuit, said generator being designed to generate a second reference clock signal (clk2), which is independent of the working clock signal (clk0) and serves in particular as a reference for the working clock signal (clk0), said second reference signal having a nominally constant clock frequency, f_{clk2_SOLL}, which is smaller than the clock frequency, f_{clk0_SOLL}, of the working clock signal by a predefined multiple,
-- and a counter controlled by one of the two reference clock signals, said counter having a counting input for the other reference clock signal that does not control the counter,
- wherein the processor is configured to determine a measured value representing the at least one measured variable using the working clock signal (clk0) as a reference, particularly as a time base, as well as the at least one measuring signal,
- and wherein the processor is configured to determine - using a counter result, delivered by the counter, for pulses of the reference clock signal applied at the counting input - whether at least one of the two clock generators delivers a reference clock signal with a current clock frequency, f_{clk1_IST} or f_{clk2_IST}, which differs from the nominal clock frequency, f_{clk1_SOLL} or f_{clk2_SOLL}, predefined for this purpose, by a predefined amount Δf_{zul}.

2. Measuring device as claimed in the previous claim,
- wherein the first clock generator (TG1) features a frequency divider for the working clock signal (clk0) for the generation of the first reference clock signal (clk1); and/or
- wherein the clock frequency of the first reference clock signal (clk1) differs from the clock frequency of the second reference clock signal (clk2), particularly in such a way that the clock frequency of the first reference clock signal (clk1) is lower than the clock frequency of the second reference clock signal (clk2); and/or
- wherein the two clock generators, which are particularly identical in design, are kept at the same operating temperature in the case of undisturbed, stationary operation; and/or
- wherein the first clock generator is arranged on a support substrate, particularly a printed circuit board, which is equivalent - at least with regard to its thermal expansion coefficient - to a support substrate, particularly a printed circuit board on which the second clock generator is arranged; and/or
- wherein the first clock generator and the second clock generator are arranged on the same support substrate, particularly a printed circuit board.

3. Measuring device as claimed in one of the previous claims,
- wherein the reference clock signal applied at the counting input is the reference clock signal whose clock frequency is greater than the clock frequency of the other reference clock signal, specifically the signal controlling the counter; and/or
- wherein the clock frequency of the reference clock signal controlling the counter determines a count interval within which the counter counts the pulses of the reference clock signal present at the counter input, particularly starting from one.

4. Measuring device as claimed in one of the previous claims, wherein the processor is configured to determine - on the basis of the first reference clock signal and the second reference clock signal - whether at least one of the two clock generators delivers a reference clock signal with a current clock frequency, f_{clk1_IST} or f_{clk2_IST}, that differs by a predefined value, Δf_{zul}, from the nominal clock frequency, f_{clk1_SOLL} or f_{clk2_SOLL}, predefined for this purpose.

5. Measuring device as claimed in the previous claim, wherein the processor is configured to use the two reference clock signals in order to generate a message, particularly a message declared as an alarm, which signals that at least one of the two clock generators delivers a reference clock signal, which has a current clock frequency, f_{clk1_IST} or f_{clk2_IST}, which differs from the nominal clock frequency, f_{clk1_SOLL} or f_{clk2_SOLL}, which is predefined for this purpose.

6. Measuring device as claimed in one of the previous claims, wherein the processor is configured to determine a current frequency difference, Δf, defined as a difference between the current clock frequency of the first reference clock signal and the current clock frequency of the second reference clock signal.

7. Measuring device as claimed in the previous claim, wherein the processor is configured to compare the determined current frequency difference, Δf, with a threshold value that is predefined for this purpose and represents a maximum permissible frequency difference, Δf_{zul}.

8. Measuring device as claimed in the previous claim, wherein the processor is configured to generate a message, particularly a message declared as an alarm, if the determined current frequency difference, Δf, exceeds the threshold value, wherein said message signals that at least one of the two clock generators delivers a reference clock signal, which presents a clock frequency that differs from a nominal clock frequency predefined for this purpose.

9. Measuring device as claimed in one of the Claims 6 to 8,
- wherein the processor determines the current frequency difference, Δf, on the basis of a frequency difference formed using the current clock frequency of the first reference clock signal and the current clock frequency of the second reference clock signal and/or on the basis of a frequency quotient formed using the current clock frequency of the first clock signal and the current clock frequency of the second clock signal; and/or
- wherein the processor determines the current frequency difference using the formula: f_{clk1_IST} - f_{clk2_IST}; and/or
- wherein the processor determines the current frequency difference using the formula: f_{clk2_IST} - f_{clk1_IST}, and/or
- wherein the processor determines the current frequency difference using the formula: f_{clk2_IST} / f_{clk1_IST}, and/or
- wherein the processor determines the current frequency difference using the formula : f_{clk1_IST} / f_{clk2_IST}; and/or
- wherein the processor determines the current frequency difference using the formula: 1 - f_{clk2_IST} / f_{clk1_IST}; and/or
- wherein the processor determines the current frequency difference using the formula: 1 - f_{clk1_IST} / f_{clk2_IST}.

10. Measuring device as claimed in one of the previous claims, wherein the measuring device electronics module further comprises:
a non-volatile data memory (EEPROM) for measuring data and/or operating data generated using the measuring device electronics module.

11. Measuring device as claimed in one of the previous claims, wherein the measuring device is a measuring device that measures on the basis of time and/or frequency, particularly a Coriolis mass flowmeter, an ultrasonic flowmeter, a vortex flowmeter, an ultrasonic level transmitter or a microwave level transmitter.

12. Measuring device as claimed in one of the previous claims, wherein the processor is configured to determine - on the basis of the first reference clock signal clk1 and the second reference clock signal clk2 - whether at least one of the two clock generators delivers a reference clock signal with a current clock frequency f_{clk1_IST} or f_{clk2_IST}, which differs by a predefined value, Δf_{zul}, from the nominal clock frequency, f_{clk1_SOLL} or f_{clk2_SOLL}, predefined for this purpose.

13. Procedure to check a measuring device as claimed in one of the previous claims, particularly for the verification of the measuring functionality of the device's measuring device electronics module and/or for the validation of measured values generated using the measuring device, said procedure comprising:
- Generation of the working clock signal (clk0) using the first clock generator and timing of the processor with the working clock signal (clk0);
- Generation of the first reference clock signal (clk1) using the first clock generator and generation of the second reference clock signal (clk2) using the second clock generator (CLK2);
- Generation, using the processor, of measured values representing the at least one measured variable, particularly based on the at least one measuring signal as well as the working clock signal as the time basis and/or frequency basis for the at least one measuring signal or measured values;
- Determination of a frequency difference, Δf, which represents a difference between the current clock frequency of the first reference clock signal and the current clock frequency of the second reference clock signal; and
- Generation of an error message that signals that at least one of the two clock generators delivers a reference clock signal with a current clock frequency that differs by a predefined value from a nominal clock frequency, predefined for this purpose, and/or which signals that measured values determined using the processor are erroneous and/or not reliable beyond a predefined value if the current clock frequencies of the first and second reference clock signal differ from one another by more than a predefined value.

14. Procedure as claimed in the previous claim, further comprising:
- a step involving the saving of the determined frequency difference, Δf, in a non-volatile data memory (EEPROM) of the measuring device electronics module; and/or
- a step involving the saving of the error message in a non-volatile data memory (EEPROM) of the measuring device electronics module.

15. Procedure as claimed in the previous claim, further comprising: a step involving the saving of a date representing the time of the generation of the error message and/or the determination of the frequency difference, Δf, particularly with the day and time, in the non-volatile data memory.

## Revendications

1. Appareil destiné à la mesure d'une grandeur physique et/ou chimique d'un produit guidé dans une tuyauterie, notamment une conduite ou un canal, ou dans un réservoir, notamment une cuve ou un bassin, lequel appareil comprend une électronique d'appareil de mesure ainsi qu'un transducteur couplé électriquement avec la même électronique d'appareil de mesure, lequel transducteur est destiné à la conversion de l'au moins une grandeur de mesure en au moins un signal de mesure en dépendant ;
- pour lequel l'électronique d'appareil de mesure comprend
-- un processeur conçu en tant que microprocesseur ou en tant que processeur de signal numérique,
-- un premier générateur d'horloge (TG1) constitué au moyen d'un oscillateur à quartz et/ou au moyen d'un circuit PLL et/ou au moyen d'un circuit FLL, lequel générateur est destiné à la génération d'un signal d'horloge de travail (clk0) cadençant le processeur et qui présente une fréquence d'horloge constante nominale, f_{clk0-SOLL}, et destiné à la génération d'un premier signal d'horloge de référence (clk1) dépendant du signal d'horloge de travail (clk0) et dont la fréquence d'horloge constante nominale, f_{clk1_SOLL}, est égale à une fraction prédéfinie de la fréquence d'horloge, f_{clk0_SOLL}, du signal d'horloge de travail,
-- un deuxième générateur d'horloge (TG2) constitué au moyen d'un oscillateur à quartz et/ou au moyen d'un circuit PLL et/ou au moyen d'un circuit FLL, lequel générateur est destiné à la génération d'un deuxième signal d'horloge de référence (clk2), indépendant du signal d'horloge de travail (clk0) et notamment servant de référence au signal d'horloge de travail (clk0), lequel deuxième signal de référence présente une fréquence d'horloge constante nominale, f_{clk2_SOLL}, qui est égale à une fraction prédéfinie de la fréquence d'horloge, f_{clk0_SOLL}, du signal d'horloge de travail,
-- ainsi qu'un compteur commandé par l'un des deux signaux d'horloge de référence, lequel compteur présente une entrée de comptage pour l'autre signal d'horloge de référence, qui ne commande pas le compteur,
- pour lequel le processeur est conçu de telle sorte à déterminer une valeur mesurée représentant l'au moins une grandeur de mesure, en utilisant le signal d'horloge de travail (clk0) comme référence, notamment comme base de temps, ainsi que l'au moins un signal de mesure,
- et pour le quel le processeur est conçu de telle sorte à déterminer - sur la base d'un résultat fourni par le compteur pour les impulsions d'horloge du signal d'horloge de référence appliqué à l'entrée de comptage - si au moins l'un des deux générateurs d'horloge délivre un signal d'horloge de référence avec une fréquence d'horloge momentanée, f_{clk1_IST} ou f_{clk2_IST}, qui diffère d'une valeur prédéfinie, Δf_{zul}, par rapport à la fréquence d'horloge nominale prédéfinie, f_{clk1_SOLL} ou f_{clk2_SOLL}.

2. Appareil selon la revendication précédente,
- pour lequel le premier générateur d'horloge (TG1) présente, pour la génération du premier signal d'horloge de référence (clk1), un diviseur de fréquence pour le signal d'horloge de travail (clk0) ; et/ou
- pour lequel la fréquence d'horloge du premier signal d'horloge de référence (clk1) diffère de la fréquence d'horloge du deuxième signal d'horloge de référence (clk2), notamment de telle sorte que la fréquence d'horloge du premier signal d'horloge de référence (clk1) soit inférieure à la fréquence d'horloge du deuxième signal d'horloge de référence (clk2) ; et/ou
- pour lequel les deux générateurs d'horloge, notamment de conception identique, sont, en cas de fonctionnement stationnaire, maintenus à la même température de fonctionnement ; et/ou
- pour lequel le premier générateur d'horloge est disposé sur un substrat de support, notamment une carte de circuit imprimé, qui est, au moins concernant son coefficient de dilatation thermique, équivalent à un substrat de support, notamment une carte de circuit imprimé, sur lequel est disposé le deuxième générateur d'horloge ; et/ou
- pour lequel le premier générateur d'horloge et le deuxième générateur d'horloge sont disposés sur le même support de substrat, notamment une carte de circuit imprimé.

3. Appareil selon l'une des revendications précédentes,
- pour lequel le signal d'horloge de référence appliqué à l'entrée de comptage est le signal d'horloge de référence, dont la fréquence d'horloge est supérieure à la fréquence d'horloge de l'autre signal d'horloge de référence, notamment celui commandant le compteur ; et/ou
- pour lequel la fréquence d'horloge du signal d'horloge de référence commandant le compteur détermine un intervalle de comptage, au sein duquel le compteur compte les impulsions du signal d'horloge de référence appliqué à l'entrée du compteur, notamment commençant par un.

4. Appareil selon l'une des revendications précédentes, pour lequel le processeur est conçu de telle sorte à déterminer, sur la base du premier signal d'horloge de référence et sur la base du deuxième signal d'horloge de référence, si au moins l'un des deux générateurs d'horloge délivre un signal d'horloge de référence avec une fréquence d'horloge momentanée, f_{clk1_IST} ou f_{clk2_IST}, qui diffère d'une valeur prédéfinie, Δf_{zul}, par rapport à la fréquence d'horloge nominale, f_{clk1_SOLL} ou f_{clk2_SOLL}, respectivement prédéfinie à cette fin.

5. Appareil selon la revendication précédente, pour lequel le processeur est conçu de telle sorte à générer, en utilisant les deux signaux d'horloge de référence, un message, notamment déclaré en tant qu'alarme, lequel message signale qu'au moins l'un des deux générateurs d'horloge délivre un signal d'horloge de référence, qui présente une fréquence d'horloge momentanée, f_{clk1_IST} ou f_{clk2_IST}, qui diffère de la fréquence d'horloge nominale, f_{clk1_SOLL} ou f_{clk2_SOLL}, respectivement prédéfinie à cette fin.

6. Appareil selon l'une des revendications précédentes, pour lequel le processeur est conçu de telle sorte à déterminer une différence de fréquence momentanée, Δf, définie en tant qu'une différence entre la fréquence d'horloge momentanée du premier signal d'horloge de référence et de la fréquence d'horloge momentanée du deuxième signal d'horloge de référence.

7. Appareil selon la revendication précédente, pour lequel le processeur est conçu de telle sorte à comparer la différence de fréquence momentanée déterminée, Δf, avec une valeur seuil prédéfinissable, qui représente une différence de fréquence maximale admissible, Δf_{zul}.

8. Appareil selon la revendication précédente, pour lequel le processeur est conçu de telle sorte, dans le cas où la différence de fréquence momentanée, Δf, dépasse la valeur seuil, à générer un message, notamment déclaré en tant qu'alarme, lequel message signale qu'au moins l'un des deux générateurs d'horloge délivre un signal d'horloge de référence, qui présente une fréquence d'horloge qui diffère de la fréquence d'horloge nominale respectivement prédéfinie.

9. Appareil selon l'une des revendications 6 à 8,
- pour lequel le processeur détermine la différence de fréquence momentanée, Δf, sur la base de la différence de fréquence formée au moyen de la fréquence d'horloge momentanée du premier signal d'horloge de référence et/ou de la fréquence d'horloge momentanée du deuxième signal d'horloge de référence et/ou sur la base du quotient de fréquence formé au moyen de la fréquence d'horloge momentanée du premier signal d'horloge et de la fréquence d'horloge momentanée du deuxième signal d'horloge ; et/ou
- pour lequel le processeur détermine la différence de fréquence momentanée sur la base de la formule : f_{clk1_IST} - f_{clk2_IST} ; et/ou
- pour lequel le processeur détermine la différence de fréquence momentanée sur la base de la formule : f_{clk2_IST} - f_{clk1_IST} ; et/ou
- pour lequel le processeur détermine la différence de fréquence momentanée sur la base de la formule : f_{clk2_IST} / f_{clk1_IST} ; et/ou
- pour lequel le processeur détermine la différence de fréquence momentanée sur la base de la formule : f_{clk1_IST} / f_{clk2_IST} ; et/ou
- pour lequel le processeur détermine la différence de fréquence momentanée sur la base de la formule : 1 - f_{clk2_IST} - f_{clk1_IST} ; et/ou
- pour lequel le processeur détermine la différence de fréquence momentanée sur la base de la formule : 1 - f_{clk1_IST} - f_{clk2_IST}.

10. Appareil selon l'une des revendications précédentes, pour lequel l'électronique d'appareil de mesure comprend en outre :
une mémoire de données non volatile (EEPROM) pour les données de mesure et/ou d'exploitation générées au moyen de l'électronique d'appareil de mesure.

11. Appareil selon l'une des revendications précédentes, pour lequel l'appareil de mesure est un appareil mesurant sur la base du temps et/ou d'une fréquence, notamment un débitmètre massique Coriolis, un débitmètre à ultrasons, un débitmètre vortex, un transmetteur de niveau à ultrasons ou un transmetteur de niveau à micro-ondes.

12. Appareil selon l'une des revendications précédentes, pour lequel le processeur est conçu de telle sorte à déterminer, sur la base du premier signal d'horloge de référence clk1 et sur la base du deuxième signal d'horloge de référence clk2, si au moins l'un des deux générateurs d'horloge délivre un signal d'horloge de référence avec une fréquence d'horloge momentanée f_{clk1_IST} ou f_{clk2_IST}, qui diffère d'une valeur, Δf_{zul}, prédéfinie par rapport à la fréquence d'horloge nominale, f_{clk1_SOLL} ou f_{clk2_SOLL}, respectivement prédéfinie à cette fin.

13. Procédé destiné au contrôle d'un appareil de mesure selon l'une des revendications précédentes, notamment pour la vérification de la fonctionnalité de mesure de son électronique d'appareil de mesure et/ou pour la validation des valeurs mesurées générées au moyen de l'appareil de mesure, lequel procédé comprend :
- Génération du signal d'horloge de travail (clk0) au moyen du premier générateur d'horloge et cadencement du processeur avec le signal d'horloge de travail (clk0) ;
- Génération du premier signal d'horloge de référence (clk1) au moyen du premier générateur d'horloge et génération du deuxième signal d'horloge de référence (clk2) au moyen du deuxième générateur d'horloge (CLK2) ;
- Génération, au moyen du processeur, de valeurs mesurées représentant l'au moins une grandeur de mesure, notamment sur la base de l'au moins un signal de mesure ainsi que le signal d'horloge de travail en tant que base de temps et/ou de fréquence pour l'au moins un signal de mesure ou les valeurs mesurées ;
- Détermination d'une différence de fréquence, Δf, qui représente une différence entre la fréquence d'horloge momentanée du premier signal d'horloge de référence et la fréquence d'horloge momentanée du deuxième signal d'horloge de référence ; ainsi que
- Génération d'un message d'erreur, qui signale qu'au moins l'un des deux générateurs d'horloge délivre un signal d'horloge de référence avec une fréquence d'horloge momentanée, qui diffère d'une valeur prédéfinie par rapport à une fréquence d'horloge nominale respectivement prédéfinie à cette fin, et/ou qui signale que les valeurs mesurées déterminées au moyen du processeur sont entachées d'erreurs ou ne sont pas fiables, au delà d'une valeur prédéfinie, au cas où les fréquences d'horloge momentanées du premier et du deuxième signal d'horloge de référence diffèrent l'une de l'autre d'une valeur prédéfinie.

14. Procédé selon la revendication précédente, comprenant en outre :
- une étape de l'enregistrement de la différence de fréquence déterminée, Δf, dans une mémoire de données non volatile (EEPROM) de l'électronique d'appareil de mesure ; et/ou
- une étape de l'enregistrement du message d'erreur dans une mémoire de données non volatile (EEPROM) de l'électronique d'appareil de mesure.

15. Procédé selon la revendication précédente, comprenant en outre : une étape d'enregistrement d'un instant de génération du message d'erreur et/ou de la détermination de la différence de fréquence, Δf, notamment avec la date comprenant le jour et l'heure, dans une mémoire de données non volatile.
